(19) Europäisches Patentamt
European Patent Office
Office européen des brevets

(11) EP 2 644 672 A2

(12) EUROPEAN PATENT APPLICATION

(43) Date of publication:
**02.10.2013 Bulletin 2013/40**

(21) Application number: **13161462.0**

(22) Date of filing: **27.03.2013**

(51) Int Cl.:
***C09J 7/02*** *(2006.01)* ***C09J 133/06*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.03.2012 JP 2012081242**
**06.11.2012 JP 2012244789**
**15.03.2013 JP 2013053894**

(71) Applicant: **NITTO DENKO CORPORATION**
**Ibaraki-shi, Osaka 567-8680 (JP)**

(72) Inventors:
- **Kataoka, Kenichi**
  **Osaka, 567-8680 (JP)**
- **Ukei, Natsuki**
  **Osaka, 567-8680 (JP)**
- **Amano, Tatsumi**
  **Osaka, 567-8680 (JP)**
- **Niimi, Kenjiro**
  **Osaka, 567-8680 (JP)**

(74) Representative: **Potter Clarkson LLP**
**The Belgrave Centre**
**Talbot Street**
**Nottingham**
**NG1 5GG (GB)**

# (54) Pressure-sensitive adhesive sheets

(57) The present invention provides a pressure-sensitive adhesive sheet having an adequate adhesion so as not to cause blistering and peeling with the lapse of time and is excellent inre-peelingpropertyandworkability. The pressure-sensitive adhesive sheet provided is a pressure-sensitive adhesive sheet having a pressure-sensitive adhesive layer formed using a pressure-sensitive adhesive composition on one or both surfaces of a supporting film, in which the shift length after 30 minutes from a creep test carried out at 23°C and a shearing load of 500 g by bonding an adhesive area of 200 $mm^2$ of the pressure-sensitive adhesive layer to a TAC polarizing plate is 2.5 mm or less, and the adhesion at a peeling rate of 0.3 m/min after 30 minute-bonding of a pressure-sensitive adhesive surface of the pressure-sensitive adhesive layer to a TAC surface at 23°C is 0.3 N/25 mm or less.

EP 2 644 672 A2

## Description

Technical Field

The present invention relates to pressure-sensitive adhesive sheets.

The pressure-sensitive adhesive sheet of the present invention is useful as a surface protecting film for protecting the surface of an optical member for use in a liquid crystal display, such as a polarizing plate, a wave plate, a retardation plate, an optical compensation film, a reflective sheet, or a brightness enhancement film.

In recent years, for transportation of optical or electronic components or mounting of optical or electronic components on printedboards, each component is oftenpackedwith a given sheet, or a pressure-sensitive adhesive tape is often bonced to each component, before transfer. In particular, surface protecting films are widely used in the field of optical or electronic components.

A surface protecting film is generally used for the purpose of preventing a scratch or a stain produced during processing or conveyance of a subject to be protected by being bonded to the subject to be protected with a pressure-sensitive adhesive applied onto a supporting film side (JP- A- 9- 165460) . For Example, a panel of a liquid crystal display is formed by bonding optical members such as a polarizing plate and a wave plate to a liquid crystal cell with a pressure-sensitive adhesive. These optical members are bonded with the surface protecting film with a pressure- sensitive adhesive interposed therebetween, and thus a subject to be protected is protected from a scratch or a stain produced during processing or conveyance.

The surface protecting film is peeled and removed when it becomes unnecessary, and along with upsizing and thinning of a liquid crystal display panel, damages to a polarizing plate and a liquid crystal cell are likely to arise during a peeling step. It is therefore required to ensure easy removal during peeling at high speed while maintaining a moderate adhesion during peeling at low speed so as not to generate lifting.

[Patent publication 1] JP- A- 09- 165460

SUMMARY OF THE INVENTION

To solve the problems of the conventional pressure-sensitive adhesive sheet, an object of the present invention is to provide a pressure-sensitive adhesive sheet having a proper adhesion so as not to generate lifting and peeling with the lapse of time and is excellent in re-peeling property and workability.

That is, the pressure-sensitive adhesive sheet of the present invention is a pressure-sensitive adhesive sheet having a pressure-sensitive adhesive layer formed using a pressure-sensitive adhesive composition on one or both surfaces of a supporting film, in which the shift length after 30 minutes from a creep test carried out at 23°C and a shearing load of 500 g by bonding an adhesive area of 200 $mm^2$ of the pressure-sensitive adhesive layer to a TAC polarizing plate is 2.5 mm or less, and the adhesion at a peeling rate of 0.3 m/min after 30 minute-bonding of a pressure-sensitive adhesive surface of the pressure-sensitive adhesive layer to a TAC surface at 23°C is 0.3 N/25 mm or less.

In the pressure-sensitive adhesive sheet of the present invention, the adhesion at a peeling rate of 30 m/min after 30 minute-bonding of the pressure-sensitive adhesive surface of the pressure-sensitive adhesive layer to the TAC surface at 23°C is preferably 1.5 N/25 mm or less.

In the pressure- sensitive adhesive sheet of the present invention, the pressure- sensitive adhesive composition preferably contains a (meth) acryl- based polymer and preferably contains 15 wt. % or less of a hydroxyl group- containing (meth) acryl- based monomer in the entire amount of monomer components composing the (meth) acryl- based polymer.

The pressure- sensitive adhesive sheet of the present invention preferably contains 50 wt. % or more of a (meth) acryl- basedmonomer having an alkyl group of 1 to 14 carbon atoms in the entire amount of monomer components composing the (meth) acryl- based polymer.

In the pressure-sensitive adhesive sheet of the present invention, the pressure-sensitive adhesive composition preferably contains a crosslinking agent.

In the pressure- sensitive adhesive sheet of the present invention, the pressure- sensitive adhesive composition preferably contains a (meth) acryl- based polymer having a hydroxyl group and a carboxyl group.

In the pressure-sensitive adhesive sheet of the present invention, the pressure-sensitive adhesive composition preferably contains an organopolysiloxane having an oxyalkylene chain.

In the pressure-sensitive adhesive sheet of the present invention, the pressure-sensitive adhesive composition preferably contains an ionic compound.

The optical member of the present invention is preferably protected by the pressure-sensitive adhesive sheet.

BRIEF DESCRIPTION OF THE DRAWING

Fig. 1 is a schematic configuration view of a potential measuring part used for measuring the peeling electrification voltage in Examples.

DETAILED DESCRIPTION OF THE PREFERRED EMBODIMENTS

Hereinafter, embodiments of the present invention will be described in detail.

The pressure- sensitive adhesive sheet of the present invention is a pressure- sensitive adhesive sheet having a pressure- sensitive adhesive layer formed using a pressure- sensitive adhesive composition on one or both surfaces of a supporting film, and the pressure- sensitive adhesive composition contains a (meth) acryl- based polymer. Since the pressure- sensitive adhesive sheet is formed using the pressure- sensitive adhesive composition using the (meth) acryl- based polymer, the pressure- sensitive adhesive sheet is useful in terms of ease of adjustment of the pressure-sensitive adhesive property or the like.

The pressure- sensitive adhesive composition used in the present invention preferably contains a (meth) acryl-based polymer having a hydroxyl group. Use of the (meth) acryl- based polymer having a hydroxyl group makes control of crosslinking of the pressure- sensitive adhesive composition easy and consequently improves the controllability of balance between the improvement of wettability owing to fluidity and decrease of the adhesion at the time of peeling. Further, different from a carboxyl group and a sulfonate group which are generally reactive as a crosslinking site, a hydroxyl group has proper interaction with an ionic compound as an antistatic agent and an organopolysiloxane having an oxyalkylene chain, so that use of the (meth) acryl- based polymer having a hydroxyl group is preferable also in terms of antistatic property.

The content of the hydroxyl group- containing (meth) acryl- based monomer in the total amount of the monomer components composing the (meth) acryl- based polymer is preferably 15 wt. % or less, more preferably 1 to 13 wt. %, furthermore preferably 2 to 11 wt. %, and most preferably 3.5 to 10 wt. %. If it is within the range, balance between the wettability of the pressure- sensitive adhesive composition and the cohesive strength can be easily controlled and therefore, it is preferable.

Examples of the hydroxyl group- containing (meth) acryl- based monomer include 2- hydroxyethyl (meth) acrylate, 2- hydroxypropyl (meth) acrylate, 4- hydroxybutyl (meth) acrylate, 6- hydroxyhexyl (meth) acrylate, 8- hydroxyoctyl (meth) acrylate, 10- hydroxydecyl (meth) acrylate, 12- hydroxylauryl (meth) acrylate, (4- hydroxymethylcyclohexyl) methyl acrylate, N- methylol (meth) acrylamide, vinyl alcohol, allyl alcohol, 2- hydroxyethyl vinyl ether, 4- hydroxybutyl vinyl ether, and diethylene glycol monovinyl ether. One or more of these hydroxyl group- containing (meth) acryl- based monomers may be used as a main component.

The pressure- sensitive adhesive composition used in the present invention is not particularly limited as long as the pressure- sensitive adhesive composition contains the (meth) acryl- basedpolvmer and the (meth) acryl- based polymer has pressure- sensitive adhesive property. It is preferable to use, as a main component of monomer components, a (meth) acryl- based monomer having an alkyl group of 1 to 14 carbon atoms and it is more preferable to use a (meth) acryl- based monomer having an alkyl group of 6 to 14 carbon atoms. One or more kinds of (meth) acryl- based monomers can be used as a main component.

Particularly, the content of the (meth) acryl- basedmonomer having an alkyl group of 1 to 14 carbon atoms in the total amount of the monomer components composing the (meth) acryl- based polymer is preferably 50 wt. % or more, more preferably 60 wt. % or more, furthermore preferably 70 wt. % or more, and most preferably 90 to 97 wt. %. If it is less than 50 wt. %, proper wettability and cohesive strength of the pressure- sensitive adhesive composition are lowered and thus it is not preferable. In the present invention, the (meth) acryl- based polymer means an acryl- based polymer and/or a methacryl- based polymer and the (meth) acrylate means an acrylate and/or a methacrylate.

Specific Examples of the (meth) acryl- based monomer having an alkyl group of 1 to 14 carbon atoms include methyl (meth) acrylate, ethyl (meth) acrylate, n- butyl (meth) acrylate, sec- butyl (meth) acrylate, tert- butyl (meth) acrylate, isobutyl (meth) acrylate, hexyl (meth) acrylate, 2- ethylhexyl (meth) acrylate, n- octyl (meth) acrylate, isooctyl (meth) acrylate, n- nonyl (meth) acrylate, isononyl (meth) acrylate, n- decyl (meth) acrylate, isodecyl (meth) acrylate, n- dodecyl (meth) acrylate, n- tridecyl (meth) acrylate, and n- tetradecyl (meth) acrylate.

Particularly when the pressure- sensitive adhesive sheet of the present invention is for use as a surface protecting film, preferred Examples include (meth) acrylates having an alkyl group of 6 to 14 carbon atoms, such as hexyl (meth) acrylate, 2- ethylhexyl (meth) acrylate, n- octyl (meth) acrylate, isooctyl (meth) acrylate, n- nonyl (meth) acrylate, isononyl (meth) acrylate, n- decyl (meth) acrylate, isodecyl (meth) acrylate, n- dodecyl (meth) acrylate, n- tridecyl (meth) acrylate, n- tetradecyl (meth) acrylate and the like. The use of a (meth) acrylate having an alkyl group of 6 to 14 carbon atoms makes it easy to control the adhesion to the adherend at a low level, so that excellent re- peeling property is achieved.

The content of a carboxyl group- containing (meth) acryl- based monomer in the total amount of the monomer components composing the (meth) acryl- based polymer is preferably 2 wt. % or less, more preferably less than 1 wt. %, and furthermore preferably less than 0.9 wt. %. If it exceeds 2 wt. %, the re- peeing property and workability are deteriorated and therefore it is not preferable. Further, if a large number of acidic functional groups such as a carboxyl

group with high polar action exist, in the case an ionic compound is added as an antistatic agent, an acidic functional group such as a carboxyl group and the ionic compound react on each other to interfere ion conduction, lower the conduction efficiency, and possibly fail to give sufficient antistatic property and therefore, it is not preferable.

As for other polymerizable monomer components, polymerizable monomers for controlling the glass transition temperature (Tg) or peeling properties of the (meth) acryl-based polymer so that the Tg can be 0°C or lower (generally -100°C or higher) may be used in terms of easy balancing of adhesive performance, as long as the effects of the present invention are not reduced.

Another polymerizable monomer other than the carboxyl group- containing (meth) acryl- based monomer, hydroxyl group- containing (meth) acryl- based monomer, and (meth) acryl- based monomer having an alkyl group of 1 to 14 carbon atoms used for the (meth) acryl- based polymer is not particularly limited as long as the characteristics of the present invention are not adversely affected. Examples of those used properly include components for improving cohesive strength and heat resistance such as cyano group- containing monomers, vinyl ester monomers, and aromatic vinyl monomers and components having a functional group for improving adhesion (adhering strength) and working as a crosslinking base point, such as an amide group- containing monomer, an imide group- containing monomer, an amino group- containing monomer, an epoxy group- containing monomer, N- acryloylmorpholine, and a vinyl ether monomer. These polymerizable monomers may be used alone or in form of a mixture of two or more thereof.

Examples of the cyano group-containing monomer include acrylonitrile and methacrylonitrile.

Examples of vinylesters include vinyl acetate, vinyl propionate, and vinyl laurate.

Examples of the aromatic vinyl compound include styrene, chlorostyrene, chloromethylstyrene, α-methylstyrene, and other substituted styrene.

Examples of the amido group-containing monomer include acrylamide, methacrylamide, diethylacrylamide, N-vinylpyrrolidone, N, N-dimethylacrylamide, N, N-dimethylmethacrylamide, N, N-diethylacrylamide, N, N-diethylmethacrylamide, N, N'-methylenebisacrylamide, N, N-dimethylaminopropylacrylamide, N, N-dimethylaminopropylmethacrylamide, and diacetoneacrylamide.

Examples of the imido group-containing monomer include cyclohexylmaleimide, isopropylmaleimide, N-cyclohexylmaleimide, and itaconeimide.

Examples of the amino group- containing monomer include aminoethyl (meth) acrylate, N, N- dimethylaminoethyl (meth) acrylate, and N, N- dimethylaminopropyl (meth) acrylate.

Examples of the epoxy group- containing monomer include glycidyl (meth) acrylate, methylglycidyl (meth) acrylate, and allyl glycidyl ether.

Examples of vinyl ethers include methyl vinyl ether, ethyl vinyl ether, and isobutyl vinyl ether.

In the present invention, the content of the polymerizable monomer other than the carboxyl group- containing (meth) acryl- based monomer, the hydroxyl group- containing (meth) acryl- based monomer, and the (meth) acryl- based monomer having an alkyl group of 1 to 14 carbon atoms in the total amount of the monomer components composing the (meth) acryl- based polymer (all the monomer components) is preferably 0 to 40 wt. % and more preferably 0 to 30 wt. %. Use of another polymerizable monomer within the above- mentioned range can cause good interaction with an ionic compound that can be used as an antistatic agent and can properly adjust good re- peeling property.

The (meth) acryl- based polymer has a weight average molecular weight of 100, 000 to 5, 000, 000, preferably 200, 000 to 4, 000, 000, more preferably 300, 000 to 3, 000, 000 and most preferably 400, 000 to 1, 000, 000. If the weight average molecular weight is less than 100, 000, there is a tendency that adhesive residue is generated due to reduction in the cohesive strength of the pressure- sensitive adhesive composition. On the other hand, if the weight average molecular weight exceeds 5, 000, 000, there is a tendency that fluidity of the polymer is reduced, wettability to a polarizing plate becomes insufficient, and that blistering may be caused between a polarizing plate and a pressure-sensitive adhesive composition layer of a pressure- sensitive adhesive sheet. The weight average molecular weight is a value measured by GPC (gel permeation chromatography) .

The glass transition temperature (Tg) of the (meth) acryl- based polymer is preferably 0°C or lower, more preferably- 10°C or lower (usually- 100°C or higher) . If the glass transition temperature is higher than 0°C, a polymer does not easily flow and wettability on a polarizing plate becomes insufficient and thus, there is a tendency that blistering may be generated between a polarizing plate and a pressure- sensitive adhesive composition layer of a pressure-sensitive adhesive sheet. In particular, adjustment of the glass transition temperature to- 61°C or lower makes it easy to obtain a pressure- sensitive adhesive composition excellent in wettability to a polarizing plate and easy peeling property. The glass transition temperature of the (meth) acryl- based polymer can be adjusted within the above- mentioned range by appropriately varying the monomer components to be used and the composition ratio.

The production of the (meth) acryl- based polymer is not particularly limited, but for Example, a known polymerization method including solution polymerization, emulsion polymerization, bulk polymerization, and suspension polymerization. The solution polymerization is more preferred in view of the workability and specific aspects such as low staining to the subject to be protected. The resultant polymer maybeanyoneselectedfromarandomcopolymer, a block copolymer, an alternate copolymer, a graft copolymer and others.

It is preferable for the pressure-sensitive adhesive sheet of the present invention that the pressure-sensitive adhesive composition contains an ionic compound. Examples of the ionic compound include alkali metal salts and/or ionic liquids. Addition of these ionic compounds can give an excellent antistatic property.

Since alkali metal salts have high ionic dissociability, they are preferable in terms of exhibition of excellent antistatic capability even if the amount of addition is very small. Examples of those used as the alkali metal salts include metal salts composed of cations such as $Li^+$, $Na^+$, and $K^+$ and anions such as $Cl^-$, $Br^-$, $I^-$, $AlCl_4^-$, $Al_2Cl_7^-$, $BF_4^-$, $PF_6^-$, $SCN^-$, $ClO_4^-$, $NO_3^-$, $CH_3COO^-$, $C_9H_{19}COO^-$, $CF_3COO^-$, $C_3F_7COO^-$, $CH_3SO_3^-$, $CF_3SO_3^-$, $C_4F_9SO_3^-$, $C_2H_5OSO_3^-$, $C_6H_{13}OSO_3^-$, $C_8H_{17}OSO_3^-$, $(CF_3SO_2)_2N^-$, $(C_2F_5SO_2)_2N^-$, $(C_3F_7SO_2)_2N^-$, $(C_4F_9SO_2)_2N^-$, $(CF_3SO_2)_3C^-$, $AsF_6^-$, $SbF_6^-$, $NbF_6^-$, $TaF_6^-$, $F(HF)_n^-$, $(CN)_2N^-$, $(CF_3SO_2)(CF_3CO)N^-$, $(CH_3)_2PO_4^-$, $(C_2H_5)_2PO_4^-$ $CH_3(OC_2H_4)_2OSO_3^-$, $C_6H_4(CH_3)SO_3^-$, $(C_2F_5)_3PF_3^-$, $CH_3CH(OH)COO^-$, and $(FSO_2)_2N^-$. More preferable Examples of those used include lithium salts such as LiBr, LiI, $LiBF_4$, $LiPF_6$, LiSCN, $LiClO_4$, $LiCF_3SO_3$, $Li(CF_3SO_2)_2N$, $Li(C_2F_5SO_2)_2N$, $Li(FSO_2)_2N$, and $Li(CF_3SO_2)_3C$ and still more preferable Examples include $LiCF_3SO_3$, $Li(CF_3SO_2)_2N$, $Li(C_2F_5SO_2)_2N$, $Li(C_3F_7SO_2)_2N$, $Li(C_4F_9SO_2)_2N$, $Li(FSO_2)_2N$, and $Li(CF_3SO_2)_3C$. These alkali metal salts may be used alone or in form of a mixture of two or more thereof.

Further, use of an ionic liquid as an antistatic agent can give a pressure- sensitive adhesive layer with a high antistatic effect without deteriorating the pressure- sensitive adhesive property. The detailed reason why use of an ionic liquid gives an excellent antistatic property is not necessarily made clear; however, since an ionic liquid is in liquid state, molecular movement is easy and thus an excellent antistatic capability is presumed to be obtained. In particular, it is supposed that an excellent antistatic property of an adherend is obtained by transferring a trace amount of the ionic liquid to the adherend in the case of preventing electrification of the adherend.

Since the ionic liquid is in a state of liquid at room temperature (25°C), addition and dispersion or dissolution in apressure- sensitive adhesive canbe easilyperformedas compared with a salt in a state of solid. The ionic liquid has such a feature that antistatic properties can be continuously obtained without losing with the lapse of time because of no vapor pressure (non- volatility) . The ionic liquid refers to a melt salt (ionic compound) which is a state of liquid at room temperature (25°C) .

The ionic liquid to be preferably used is composed of organic cation components represented by the following general formulas (A) to (E) and an anion component. Further excellent antistatic ability is obtained through the use of the ionic liquid comprising these cation components.

[Chemical Formula 1]

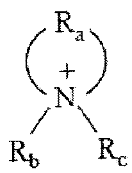
(A)

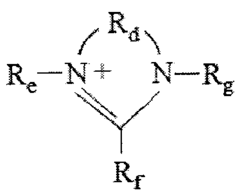
(B)

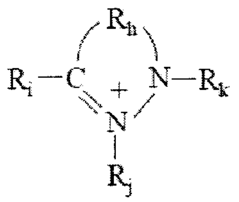
(C)

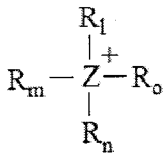
(D)

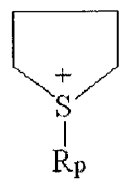
(E)

In the formula (A), $R_a$ represents a hydrocarbon group of a carbon number of 4 to 20, and may contain a hetero atom, and $R_b$ and $R_c$ are the same or different, represent hydrogen or a hydrocarbon group of a carbon number of 1 to 16, and may contain a hetero atom, provided that, when a nitrogen atom contains a double bond, $R_c$ is not present.

In the formula (B), $R_d$ represents a hydrocarbon group of a carbon number of 2 to 20, and may contain a hetero atom, and $R_e$, $R_f$ and $R_g$ are the same or different, represent hydrogen or a hydrocarbon group of a carbon number of 1 to 16, and may contain a hetero atom.

In the formula (C), $R_h$ represents a hydrocarbon group of a carbon number of 2 to 20, and may contain a hetero atom, and $R_i$, $R_j$ and $R_k$ are the same or different, represent a hydrogen or a hydrocarbon group of a carbon number of 1 to 16, and may contain a hetero atom.

In the formula (D), Z represents a nitrogen atom, a sulfur atom, or a phosphorus atom, and $R_l$, $R_m$, $R_n$ and $R_o$ are the same or different, represent a hydrocarbon group of a carbon number of 1 to 20, and may contain a hetero atom, provided that, when Z is a sulfur atom, $R_o$ is not present.

Rp in the formula (E) represents a hydrocarbon group of 1 to 18 carbon atoms and may be a functional group in which a part of the hydrocarbon group is substituted with a hetero atom.

Examples of the cation represented by the formula (A) include a pyridinium cation, a piperidinium cation, a

pyrrolidinium cation, a cation having a pyrroline skeleton, a cation having a pyrrole skeleton, and a morpholinium cation.

Specific Examples include 1- ethylpyridinium cation, 1- butylpyridinium cation, 1- hexylpyridinium cation, 1- butyl- 3- methylpyridinium cation, 1- butyl- 4- methylpyridinium cation, 1- hexyl- 3- methylpyridinium cation, 1- butyl- 3, 4- dimethylpyridinium cation, 1, 1- dimethylpyrrolidinium cation, 1- ethyl- 1- methylpyrrolidinium cation, 1- methyl- 1- propylpyrrolidinium cation, 1- methyl- 1- butylpyrrolidinium cation, 1- methyl- 1- pentylpyrrolidinium cation, 1- methyl- 1- hexylpyrrolidinium cation, 1- methyl- 1- heptylpyrrolidinium cation, 1- ethyl- 1- propylpyrrolidinium cation, 1- ethyl- 1- butylpyrrolidinium cation, 1- ethyl- 1- pentylpyrrolidinium cation, 1- ethyl- 1- hexylpyrrolidinium cation, 1- ethyl- 1- heptylpyrrolidinium cation, 1, 1- dipropylpyrrolidinium cation, 1- propyl- 1- butylpyrrolidinium cation, 1, 1- dibutylpyrrolidinium cation, pyrrolidinium- 2- one cation, 1- propylpiperidinium cation, 1- pentylpiperidinium cation, 1, 1- dimethylpiperidinium cation, 1- methyl- 1- ethylpiperidinium cation, 1- methyl- 1- propylpiperidinium cation, 1- methyl- 1- butylpiperidinium cation, 1- methyl- 1- pentylpiperidinium cation, 1- methyl- 1- hexylpiperidinium cation, 1- methyl- 1- heptylpiperidinium cation, 1- ethyl- 1- propylpiperidinium cation, 1- ethyl- 1- butylpiperidinium cation, 1- ethyl- 1- pentylpiperidinium cation, 1- ethyl- 1- hexylpiperidinium cation, 1- ethyl- 1- heptylpiperidinium cation, 1, 1- dipropylpiperidinium cation, 1- propyl- 1- butylpiperidinium cation, 1, 1- dibutylpiperidinium cation, 2- methyl- 1- pyrroline cation, 1- ethyl- 2- phenylindole cation, 1, 2- dimethylindole cation, 1- ethylcarbazole cation, and N- ethyl- N- methylmorpholinium cation.

The cation defined by the formula (B) may be, for Example, imidazolium cation, tetrahydropyrimidinium cation, and dihydropyrimidinium cation.

Specific Examples include 1, 3- dimethylimidazolium cation, 1, 3- diethylimidazolium cation, 1- ethyl- 3- methylimidazolium cation, 1- butyl- 3- methylimidazolium cation, 1- hexyl- 3- methylimidazolium cation, 1- octyl- 3- methylimidazolium cation, 1- decyl- 3- methylimidazolium cation, 1- dodecyl- 3- methylimidazolium cation, 1- tetradecyl- 3- methylimidazolium cation, 1, 2- dimethyl- 3- propylimidazolium cation, 1- ethyl- 2, 3- dimethylimidazolium cation, 1- butyl- 2, 3- dimethylimidazolium cation, 1- hexyl- 2, 3- dimethylimidazolium cation, 1- (2- methoxyethyl)- 3- methylimidazolium cation, 1, 3- dimethyl- 1, 4, 5, 6- tetrahydropyrimidinium cation, 1, 2, 3- trimethyl- 1, 4, 5, 6- tetrahydropyrimidinium cation, 1, 2, 3, 4- tetramethyl- 1, 4, 5, 6- tetrahydropyrimidinium cation, 1, 2, 3, 5- tetramethyl- 1, 4, 5, 6- tetrahydropyrimidinium cation, 1, 3- dimethyl- 1, 4- dihydropyrimidinium cation, 1, 3- dimethyl- 1, 6- dihydropyrimidinium cation, 1, 2, 3- trimethyl- 1, 4- dihydropyrimidinium cation, 1, 2, 3- trimethyl- 1, 6- dihydropyrimidinium cation, 1, 2, 3, 4- tetramethyl- 1, 4- dihydropyrimidinium cation, and 1, 2, 3, 4- tetramethyl- 1, 6- dihydropyrimidinium cation.

Examples of the cation represented by the formula (C) include a pyrazolium cation, and a pyrazolinium cation.

Specific Examples include a 1- methylpyrazolium cation, a 3- methylpyrazolium cation, a 1- ethyl- 2- methylpyrazolinium cation, a 1- ethyl- 2, 3, 5- trimethylpyrazolium cation, a 1- propyl- 2, 3, 5- trimethylpyrazolium cation, and a 1- butyl- 2, 3, 5- trimethylpyrazolium cation, a 1- ethyl- 2, 3, 5- trimethylpyrazolinium cation, a 1- propyl- 2, 3, 5- trimethylpyrazolinium cation, and a 1- butyl- 2, 3, 5- trimethylpyrazolinium cation.

Examples of the cation represented by the formula (D) include a tetraalkylammoniumcation,atrialkylsulfonium cation, a tetraalkylphosphonium cation, and those cations in which a part of the alkyl group is substituted with an alkenyl group, an alkoxyl group, or an epoxy group.

Specific Examples include tetramethylammonium cation, tetraethylammonium cation, tetrabutylammonium cation, tetrapentylammonium cation, tetrahexylammonium cation, tetraheptylammonium cation, triethylmethylammonium cation, tributylethylammonium cation, trimethyldecylammonium cation, N, N- diethyl- N- methyl- N- (2- methoxyethyl) ammonium cation, glycidyltrimethylammonium cation, trimethylsulfonium cation, triethylsulfonium cation, tributylsulfonium cation, trihexylsulfonium cation, diethylmethylsulfonium cation, dibutylethylsulfonium cation, dimethyldecylsulfonium cation, tetramethylphosphonium cation, tetraethylphosphonium cation, tetrabutylphosphonium cation, tetrahexylphosphonium cation, tetraoctylphosphonium cation, triethylmethylphosphonium cation, tributylethylphosphonium cation, trimethyldecylphosphonium cation, diallyldimethylammonium cation, and tributyl- (2- methoxyethyl) phosphonium cation. Especially preferable Examples of those used include asymmetric tetraalkylammonium cations, trialkylsulfonium cations, and tetraalkylphosphonium cations such as triethylmethylammonium cation, tributylethylammonium cation, trimethyldecylammonium cation, diethylmethylsulfonium cation, dibutylethylsulfonium cation, dimethyldecylsulfonium cation, triethylmethylphosphonium cation, tributylethylphosphonium cation, and trimethyldecylphosphonium cation; and N, N- diethyl- N- methyl- N- (2- methoxyethyl) ammonium cation, glycidyltrimethylammonium cation, diallyldimethylammonium cation, N, N- dimethyl- N- ethyl- N- propylammonium cation, N, N- dimethyl- N- ethyl- N- butylammonium cation, N, N- dimethyl- N- ethyl- N- pentylammonium cation, N, N- dimethyl- N- ethyl- N- hexylammonium cation, N, N- dimethyl- N- ethyl- N- heptylammonium cation, N, N- dimethyl- N- ethyl- N- nonylammonium cation, N, N- dimethyl- N, N- dipropylammonium cation, N, N- diethyl- N- propyl- N- butylammonium cation, N, N- dimethyl- N- propyl- N- pentylammonium cation, N, N- dimethyl- N- propyl- N- hexylammonium cation, N, N- dimethyl- N- propyl- N- heptylammonium cation, N, N- dimethyl- N- butyl- N- hexylammonium cation, N, N- diethyl- N- butyl- N- heptylammonium cation, N, N- dimethyl- N- pentyl- N- hexylammonium cation, N, N- dimethyl- N, N- dihexylammonium cation, trimethylheptylammonium cation, N, N- diethyl- N- methyl- N- propylammonium cation, N, N- diethyl- N- methyl- N- pentylammonium cation, N, N- diethyl- N- methyl- N- heptylammonium cation, N, N- diethyl- N- propyl- N- pentylammonium cation, triethylpropylammonium cation, triethylpentylammoniumcation, triethylheptylammonium cation, N, N- dipropyl- N- methyl- N- ethylammonium

cation, N, N- dipropyl- N- methyl- N- pentylammonium cation, N, N- dipropyl- N- butyl- N- hexylammonium cation, N, N- dipropyl- N, N- dihexylammonium cation, N, N- dibutyl- N- methyl- N- pentylammonium cation, N, N- dibutyl- N- methyl- N- hexylammonium cation, trioctylmethylammonium cation, and N- methyl- N- ethyl- N- propyl- N- pentylammonium cation.

The cation represented by the formula (E) includes, for Example, a sulfonium cation. Specific Examples of Rp in the formula (E) include a methyl group, an ethyl group, a propyl group, a butyl group, a hexyl group, an octyl group, a nonyl group, a decyl group, a dodecyl group, a tridecyl group, a tetradecyl group, an octadecyl group and the like.

On the other hand, the anionic component is not particularly limited as long as it can be an ionic liquid and Examples of those used include $Cl^-$, $Br^-$, $I^-$, $AlCl_4^-$, $Al_2Cl_7^-$, $BF_4^-$, $PF_6^-$, $ClO_4^-$, $NO_3^-$, $CH_3COO^-$, $CF_3COO^-$, $CH_3SO_3^-$, $CF_3SO_3^-$, $C_4F_9SO_3^-$, $(CF_3SO_2)_2N^-$, $(C_2F_5SO_2)_2N^-$, $(C_3F_7SO_2)_2N^-$, $(C_4F_9SO_2)_2N^-$, $(CF_3SO_2)_3C^-$, $AsF_6^-$, $SbF_6^-$, $NbF_6^-$, $TaF_6^-$, $F(HF)_n^-$, $(CN)_2N^-$, $C_4F_9SO_3^-$, $(C_2F_5SO_2)_2N^-$, $C_3F_7COO^-$, $(CF_3SO_2)(CF_3CO)N^-$, $C_9H_{19}COO^-$, $(CH_3)_2PO_4^-$, $(C_2H_5)_2PO_4^-$, $C_2H_5OSO_3^-$, $C_6H_{13}OSO_3^-$, $C_8H_{17}OSO_3^-$, $CH_3(OC_2H_4)_2OSO_3^-$, $C_6H_4(CH_3)SO_3^-$, $(C_2F_5)_3PF_3^-$, $CH_3CH(OH)COO^-$, and $(FSO_2)_2N^-$.

It is also possible to use, as an anion component, an anion represented by the following formula (F).

[Chemical Formula 2]

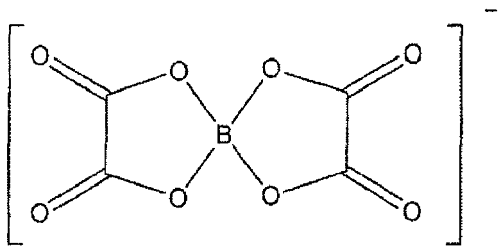

(F)

Above all, since an anion component containing a fluorine atom gives a low melting point ionic liquid, it is particularly preferably used as the anionic component.

Specific Examples of those used as an ionic liquid in the present invention include those which are properly selected from combinations of the above- mentioned cationic components and anionic components, and include 1- butylpyridinium tetrafluoroborate, 1- butylpyridinium hexafluorophosphate, 1- butyl- 3- methylpyridinium tetrafluoroborate, 1- butyl- 3- methylpyridinium trifluoromethanesulfonate, 1- butyl- 3- methylpyridinium bis (trifluoromethanesulfonyl) imide, 1- butyl- 3- methylpyridinium bis (pentafluoroethanesulfonyl) imide, 1- hexylpyridinium tetrafluoroborate, 1, 1- dimethylpyrrolidinium bis (trifluoromethanesulfonyl) imide, 1- methyl- 1- ethylpyrrolidinium bis (trifluoromethanesulfonyl) imide, 1- methyl- 1- propylpyrrolidinium bis (trifluoromethanesulfonyl) imide, 1- methyl- 1- butylpyrrolidinium bis (trifluoromethanesulfonyl) imide, 1- methyl- 1- pentylpyrrolidinium bis (trifluoromethanesulfonyl) imide, 1- methyl- 1- hexylpyrrolidinium bis (trifluoromethanesulfonyl) imide, 1- methyl- 1- heptylpyrrolidinium bis (trifluoromethanesulfonyl) imide, 1- ethyl- 1- propylpyrrolidinium bis (trifluoromethanesulfonyl) imide, 1- ethyl- 1- butylpyrrolidinium bis (trifluoromethanesulfonyl) imide, 1- ethyl- 1- pentylpyrrolidinium bis (trifluoromethanesulfonyl) imide, 1- ethyl- 1- hexylpyrrolidinium bis (trifluoromethanesulfonyl) imide, 1- ethyl- 1- heptylpyrrolidinium bis (trifluoromethanesulfonyl) imide, 1, 1- dipropylpyrrolidinium bis (trifluoromethanesulfonyl) imide, 1- propyl- 1- butylpyrrolidinium bis (trifluoromethanesulfonyl) imide, 1, 1- dibutylpyrrolidinium bis (trifluoromethanesulfonyl) imide, 1- propylpiperidinium bis (trifluoromethanesulfonyl) imide, 1- pentylpiperidinium bis (trifluoromethanesulfonyl) imide, 1, 1- dimethylpiperidinium bis (trifluoromethanesulfonyl) imide, 1- methyl- 1- ethylpiperidinium bis (trifluoromethanesulfonyl) imide, 1- methyl- 1- propylpiperidinium bis (trifluoromethanesulfonyl) imide, 1- methyl- 1- butylpiperidinium bis (trifluoromethanesulfonyl) imide, 1- methyl- 1- pentylpiperidinium bis (trifluoromethanesulfonyl) imide, 1- methyl- 1- hexylpiperidinium bis (trifluoromethanesulfonyl) imide, 1- methyl- 1- heptylpiperidinium bis (trifluoromethanesulfonyl) imide, 1- ethyl- 1- propylpiperidinium bis (trifluoromethanesulfonyl) imide, 1- ethyl- 1- butylpiperidinium bis (trifluoromethanesulfonyl) imide, 1- ethyl- 1- pentylpiperidinium bis (trifluoromethanesulfonyl) imide, 1- ethyl- 1- hexylpiperidinium bis (trifluoromethanesulfonyl) imide, 1- ethyl- 1- heptylpiperidinium bis (trifluoromethanesulfonyl) imide, 1, 1- dipropylpiperidinium bis (trifluoromethanesulfonyl) imide, 1- propyl- 1- butylpiperidinium bis (trifluoromethanesulfonyl) imide, 1, 1- dibutylpiperidinium bis (trifluoromethanesulfonyl) imide, 1, 1- dimethylpyrrolidinium bis (pentafluoroethanesulfonyl) imide, 1- methyl- 1- ethylpyrrolidinium bis (pentafluoroethanesulfonyl) imide, 1- methyl- 1- propylpyrrolidinium bis (pentafluoroethanesulfonyl) imide, 1- methyl- 1- butylpyrrolidinium bis (pentafluoroethanesulfonyl) imide, 1- methyl- 1- pentylpyrrolidinium bis (pentafluoroethanesulfonyl) imide, 1- methyl- 1- hexylpyrrolidinium bis (pentafluoroethanesulfonyl) imide, 1- methyl- 1- heptylpyrrolidinium bis (pentafluoroethanesulfonyl)imide, 1- ethyl- 1- propylpyrrolidinium bis (pentafluoroethanesulfonyl) imide, 1- ethyl- 1- butylpyrrolidinium bis (pentafluoroethanesulfonyl) imide, 1- ethyl- 1- pentylpyrrolidinium bis (pentafluoroethanesulfonyl) imide, 1- ethyl- 1- hexylpyrrolidinium bis (pentafluoroethanesulfonyl) imide, 1- ethyl- 1- heptylpyrrolidinium bis (pentafluoroethanesulfonyl) imide, 1, 1- dipropylpyrrolidinium bis (pentafluoroethanesulfonyl) imide, 1- propyl- 1- butylpyrrolidinium bis (pentafluoroethanesulfonyl) imide, 1, 1- dibutylpyrrolidinium bis (pentafluoroethanesulfonyl) imide, 1- propylpiperidinium bis (pentafluoroethanesulfonyl) imide, 1- pentylpiperidinium bis (pentafluoroethanesulfonyl) imide, 1, 1- dimethylpiperidinium bis (pentafluoroethanesulfonyl) imide, 1- methyl- 1- ethylpiperidinium bis (pentafluoroethanesulfonyl) imide, 1- methyl- 1- propylpiperidinium bis (pentafluoroethanesulfonyl) imide, 1- methyl- 1- butylpiperidinium bis (pentafluoroethanesulfonyl) imide, 1- methyl- 1- pentylpiperidinium bis (pentafluoroethanesulfonyl) imide, 1- methyl- 1- hexylpiperidinium bis (pentafluoroethanesulfonyl) imide, 1- methyl- 1- heptylpiperidinium bis (pentafluoroethanesulfonyl) imide, 1- ethyl- 1- propylpiperidinium bis (pentafluoroethanesulfonyl) imide, 1- ethyl- 1- butylpiperidinium bis (pentafluoroethanesulfonyl) imide, 1- ethyl- 1- pentylpiperidinium bis (pentafluoroethanesulfonyl) imide, 1- ethyl- 1- hexylpiperidinium bis (pentafluoroethanesulfonyl) imide, 1- ethyl- 1- heptylpiperidinium bis (pentafluoroethanesulfonyl) imide, 1, 1- dipropylpiperidinium bis (pentafluoroethanesulfonyl) imide, 1- propyl- 1- butylpiperidinium bis (pentafluoroethanesulfonyl) imide, 1, 1- dibutylpiperidinium bis (pentafluoroethanesulfonyl) imide, 2- methyl- 1- pyrroline tetrafluoroborate, 1- ethyl- 2- phenylindoletetrafluoroborate, 1, 2- dimethylindoletetrafluoroborate, 1- ethylcarbazoletetrafluoroborate, 1- ethyl- 3- methylimidazoliumtetrafluoroborate, 1- ethyl- 3- methylimidazoliumacetate, 1- ethyl- 3- methylimidazolium trifluoroacetate, 1- ethyl- 3-methylimidazolium heptafluorobutyrate, 1- ethyl- 3- methylimidazolium trifluoromethanesulfonate, 1- ethyl- 3- methylimidazolium perfluorobutanesulfonate, 1- ethyl- 3- methylimidazolium dicyanamide, 1- ethyl- 3- methylimidazolium bis (trifluoromethanesulfonyl) imide, 1- ethyl- 3- methylimidazolium bis (pentafluoroethanesulfonyl) imide, 1- ethyl- 3- methylimidazolium tris (trifluoromethanesulfonyl) imide, 1- butyl- 3- methylimidazolium tetrafluoroborate, 1- butyl- 3- methylimidazolium hexafluorophosphate, 1- butyl- 3- methylimidazoliumtrifluoroacetate, 1- butyl- 3- methylimidazoliumheptafluorobutyrate, 1- butyl- 3- methylimidazoliumtrifluoromethanesulfonate, 1- butyl- 3- methylimidazolium perfluorobutanesulfonate, 1- butyl- 3- methylimidazolium bis (trifluoromethanesulfonyl) imide, 1- hexyl- 3- methylimidazolium bromide, 1- hexyl- 3- methylimidazolium chloride, 1- hexyl- 3- methylimidazolium tetrafluoroborate, 1- hexyl- 3- methylimidazolium hexafluorophosphate, 1- hexyl- 3- methylimidazolium trifluoromethanesulfonate, 1- octyl- 3- methylimidazolium tetrafluoroborate, 1- octyl- 3- methylimidazolium hexafluorophosphate, 1- hexyl- 2, 3- dimethylimidazolium tetrafluoroborate, 1, 2- dimethyl- 3- propylimidazolium bis (trifluoromethanesulfonyl) imide, tetrapentylammonium cation, tetrahexylammoniumcation, tetraheptylammoniumcation, tetraoctylphosphonium cation, 1- methylpyrazolium tetrafluoroborate, 2- methylpyrazolium tetrafluoroborate, 1- ethyl- 2, 3, 5- trimethylpyrazolium bis (trifluoromethanesulfonyl) imide, 1- propyl- 2, 3, 5- trimethylpyrazolium bis (trifluoromethanesulfonyl) imide, 1- butyl- 2, 3, 5- trimethylpyrazolium bis (trifluoromethanesulfonyl) imide, 1- ethyl- 2, 3, 5- trimethylpyrazolium bis (pentafluoroethanesulfonyl) imide, 1- propyl- 2, 3, 5- trimethylpyrazolium bis (pentafluoroethanesulfonyl) imide, 1- butyl- 2, 3, 5- trimethylpyrazolium bis (pentafluoroethanesulfonyl) imide, 1- ethyl- 2, 3, 5- trimethylpyrazolium bis (trifluoromethanesulfonyl) trifluoroacetamide, 1- propyl- 2, 3, 5- trimethylpyrazolium bis (trifluoromethanesulfonyl) trifluoroacetamide, 1- butyl- 2, 3, 5- trimethylpyrazolium bis (trifluoromethanesulfonyl) trifluoroacetamide, 1- ethyl- 2, 3, 5- trimethylpyrazolinium bis (trifluoromethanesulfonyl) imide, 1- propyl- 2, 3, 5- trimethylpyrazolinium bis (trifluoromethanesulfonyl) imide, 1- butyl- 2, 3, 5- trimethylpyrazolinium bis (trifluoromethanesulfonyl) imide, 1- ethyl- 2, 3, 5- trimethylpyrazolinium bis (pentafluoroethanesulfonyl) imide, 1- propyl- 2, 3, 5- trimethylpyrazolinium bis (pentafluoroethanesulfonyl) imide, 1- butyl- 2, 3, 5- trimethylpyrazolinium bis (pentafluoroethanesulfonyl) imide, 1- ethyl- 2, 3, 5- trimethylpyrazolinium bis (trifluoromethanesulfonyl) trifluoroacetamide, 1- propyl- 2, 3, 5- trimethylpyrazolinium bis (trifluoromethanesulfonyl) trifluoroacetamide, 1- butyl- 2, 3, 5- trimethylpyrazolinium bis (trifluoromethanesulfonyl) trifluoroacetamide, tetrapentylammonium trifluoromethanesulfonate, tetrapentylammonium bis (trifluoromethanesulfonyl) imide, tetrahexylammonium trifluoromethanesulfonate, tetrahexylammonium bis (trifluoromethanesulfonyl) imide, tetrabutylammonium trifluoromethanesulfonate, tetraheptylammonium bis (trifluoromethanesulfonyl) imide, diallyldimethylammonium tetrafluoroborate, diallyldimethylammonium trifluoromethanesulfonate, diallyldimethylammonium bis (trifluoromethanesulfonyl) imide, diallyldimethylammonium bis (pentafluoroethanesulfonyl) imide, N, N- diethyl- N- methyl- N- (2- methoxyethyl) ammonium tetrafluoroborate, N, N- diethyl- N- methyl- N- (2-methoxyethyl) ammonium trifluoromethanesulfonate, N, N- diethyl- N- methyl- N- (2- methoxyethyl) ammonium bis (trifluoromethanesulfonyl) imide, N, N- diethyl- N- methyl- N- (2- methoxyethyl) ammonium bis (pentafluoroethanesulfonyl) imide, glycidyltrimethylammonium trifluoromethanesulfonate, glycidyltrimethylammonium bis (trifluoromethanesulfonyl) imide, glycidyltrimethylammonium bis (pentafluoroethanesulfonyl) imide, tetraoctylphosphonium trifluoromethanesulfonate, tetraoctylphosphonium bis (trifluoromethanesulfonyl) imide, N, N- dimethyl- N- ethyl- N- propylammonium bis (trifluoromethanesulfonyl) imide, N, N- dimethyl- N- ethyl- N- butylammonium bis (trifluoromethanesulfonyl) imide, N, N- dimethyl- N- ethyl- N- pentylammonium bis (trifluoromethanesulfonyl) imide, N, N- dimethyl- N- ethyl- N- hexylammonium bis (trifluoromethanesulfonyl) imide, N, N- dimethyl- N- ethyl- N- heptylammonium bis (trifluoromethanesulfonyl) imide, N, N- dimethyl- N- ethyl- N- nonylammonium bis (trifluoromethanesulfonyl) imide, N, N- dimethyl- N, N-dipropylammonium bis (trifluoromethanesulfonyl) imide, N, N- dimethyl- N- propyl- N- butylammonium bis (trifluoromethanesulfonyl) imide, N, N- dimethyl- N- propyl- N- pentylammonium bis (trifluoromethanesulfonyl) imide, N, N- dimethyl-N- propyl- N- hexylammonium bis (trifluoromethanesulfonyl) imide, N, N- dimethyl- N- propyl- N- heptylammonium bis (trifluoromethanesulfonyl) imide, N, N- dimethyl- N- butyl- N- hexylammonium bis (trifluoromethanesulfonyl) imide, N, N- dimethyl- N- butyl- N- heptylammonium bis (trifluoromethanesulfonyl) imide, N, N- dimethyl- N- pentyl- N- hexylammonium bis (trifluoromethanesulfonyl) imide, N, N- dimethyl- N, N- dihexylammonium bis (trifluoromethanesulfonyl) imide, trimethylheptylammonium bis (trifluoromethanesulfonyl) imide, N, N- diethyl- N- methyl- N- propylammonium bis (trifluoromethanesulfonyl) imide, N, N- diethyl- N- methyl- N- pentylammonium bis (trifluoromethanesulfonyl) imide, N, N- diethyl- N- methyl- N- heptylammonium bis (trifluoromethanesulfonyl) imide, N, N- diethyl- N- propyl- N- pentylammonium bis (trifluoromethanesulfonyl) imide, triethylpropylammonium bis (trifluoromethanesulfonyl) imide, triethylpentylammonium bis (trifluoromethanesulfonyl) imide, triethylheptylammonium bis (trifluoromethanesulfonyl) imide, N, N- dipropyl- N- methyl- N- ethylammonium bis (trifluoromethanesulfonyl) imide, N, N- dipropyl- N- methyl- N- pentylammonium bis (trifluoromethanesulfonyl) imide, N, N- dipropyl- N- butyl- N- hexylammonium bis (trifluoromethanesulfonyl) imide, N, N- dipropyl- N, N- dihexylammonium bis (trifluoromethanesulfonyl) imide, N, N- dibutyl- N- methyl- N- pentylammonium bis (trifluoromethanesulfonyl) imide, N, N- dibutyl- N- methyl- N- hexylammonium bis (trifluoromethanesulfonyl) imide, trioctylmethylammonium bis (trifluoromethanesulfonyl) imide, N- methyl- N- ethyl- N- propyl- N- pentylammonium bis (trifluoromethanesulfonyl) imide, 1- butylpyridinium (trifluoromethanesulfonyl) trifluoroacetamide, 1- butyl-3- methylpyridinium (trifluoromethanesulfonyl) trifluoroacetamide, 1- ethyl- 3- methylimidazolium (trifluoromethanesulfonyl) trifluoroacetamide, N- ethyl- N- methylmorpholinium thiocyanate, and 4- ethyl- 4- methylmorpholinium methylcarbonate.

As the aforementioned ionic liquid, a commercially available ionic liquid may be used, or the liquid may be synthesized as described below. A method of synthesizing an ionic liquid is not particularly limited as far as an objective ionic liquid is obtained. Generally, a halide method, a hydroxide method, an acid ester method, a chelate forming method, and a neutralization method described in the publication "Ionic liquid-The Front and Future of Development-" (published by CMC) are used.

Regarding a halide method, a hydroxide method, an acid ester method, a chelate forming method, and a neutralization method, a synthesis method using an Example of a nitrogen-containing onium salt will be shown below, but other ionic liquid such as a sulfur-containing onium salt, and a phosphorus-containing onium salt can be obtained by the similar procedure.

The halide method is a method which is performedby a reaction shown in the following formulas (1) to (3). First, a tertiary amine and alkyl halide are reacted to obtain halide (Reaction Equation (1), as a halogen, chlorine, bromine or iodine is used). The resulting halide is reacted with an acid (HA) having an anion structure ($A^-$) of an objective ionic liquid or a salt (MA, M is a cation forming a salt with an objective anion such as ammonium, lithium, sodium and potassium) of an objective ionic liquid to obtain an objective ionic liquid ($R_4NA$).

[Chemical Formula 3]

(1) $R_3N+RX \rightarrow R_4NX$ (X: Cl, Br, I)

(2) $R_4NX+HA \rightarrow R_4NA+HX$

(3) $R_4NX+MA \rightarrow R_4NA+MX$ (M: $NH_4$, Li, Na, K, Ag etc.)

The hydroxide method is a method performed by a reaction shown in (4) to (8). First, a halide ($R_4NX$) is subjected to ion exchange membrane method electrolysis (reaction equation (4)), an OH-type ion exchange resin method (reaction equation (5)) or a reaction with silver oxide ($Ag_2O$) (reaction equation (6)) to obtain a hydroxide ($R_4NOH$) (as a halogen, chlorine, bromine or iodine is used) . The resulting hydroxide is subjected to a reaction of reaction equations (7) to (8) as in the aforementioned halide method to obtain an objective ionic liquid ($R_4NA$).

[Chemical Formula 4]

(4) $R_4NX+H_2O \rightarrow R_4NOH+1/2H_2+1/2X_2$ (X: Cl, Br, I)

(5) $R_4NX+P\text{-} OH \rightarrow R_4NOH+P\text{-} X$ (P- OH: OH- type ion exchange resin)

(6) $R_4NX+1/2Ag_2O+1/2H_2O \rightarrow R_4NOH+AgX$

(7) $R_4NOH+HA \rightarrow R_4NA+H_2O$

(8) $R_4NOH+MA \rightarrow R_4NA+MOH$ (M: $NH_4$, Li, Na, K, Ag etc.)

The acid ester method is a method performed by a reaction shown in (9) to (11). First, tertiary amine ($R_3N$) is reacted with acid ester to obtain an acid esterified substance (reaction equation (9), as acid ester, ester of an inorganic acid such as sulfuric acid, sulfurous acid, phosphoric acid, phosphorous acid, and carbonic acid, or ester of organic acid such as methanesulfonic acid, methylphosphonic acid and formic acid is used). The resulting acid esterified substance is subjected to a reaction of reaction equations (10) to (11) as in the aforementionedhalidemethod, to obtain an objective ionic liquid ($R_4NA$). Alternatively, as acid ester, methyl trifluoromethane sulfonate, or methyl trifluoroacetate may be used to directly obtain an ionic liquid.

[Chemical Formula 5]

$R_3N+ROY \rightarrow R_4NOY$ (9)

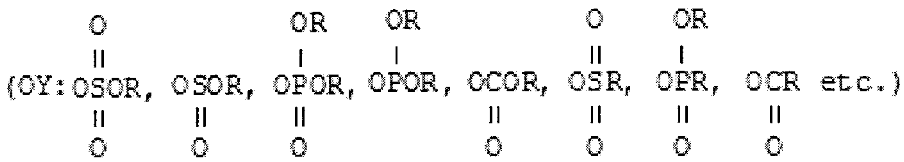

$R_4NOY+HA \rightarrow R_4NA+HOY$ (10)

(in the case of

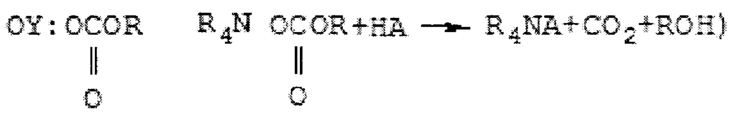

$R_4NOY+MA \rightarrow R_4NA+MOY$ (M: $NH_4$, Li, Na, K, Ag etc.) (11)

The chelate forming method is a method performed by a reaction as shown in (12) to (15) . First, halide of quaternary ammonium ($R_4NX$), hydroxide of quaternary ammonium ($R_4NOH$), or carbonic acid esterified substance of quaternary ammonium ($R_4NOCO_2CH_3$) is reacted with hydrogen fluoride (HF) or ammonium fluoride ($NH_4F$) to obtain a quaternary ammonium fluoride salt (reaction equation (12) to (14) ) . The resulting quaternary ammonium fluoride salt can be subjected to a chelate forming reaction with fluoride such as $BF_3$, $AlF_3$, $PF_5$, $ASF_5$, $SbF_5$, $NbF_5$ and $TaF_6$, to obtain an ionic liquid (reaction equation (15) ) .

[Chemical Formula 6]

(12) $R_4NX+HF \rightarrow R_4NF+HX$ (X: Cl, Br, I)

(13) $R_4NY+HF \rightarrow R_4NF+HY$ (Y: OH, $OCO_2CH_3$)

(14) $R_4NY+NH_4F- R_4NF+NH_3+HY$ (Y: OH, $OCO_2CH_3$)

(15) $R_4NF+MF_{n-1} \rightarrow R_4NMF_n$

($MF_{n-1}$: $BF_3$, $AlF_3$, $PF_5$, $ASF_5$, $SbF_5$, $NbF_5$, $TaF_5$ etc.)

The neutralization method is a method performed by a reaction shown in (16) . An ionic liquid can be obtained by reacting tertiary amine and an organic acid such as $HBF_4$, $HBF_6$, $CH_3COOH$, $CF_3COOH$, $CF_3SO_3H$, $(CF_3SO_2)_2NH$, $(CF_3SO_2)_3CH$, and $(C_2F_5SO_2)_2NH$.

[Chemical Formula 7]

(16) $R_3N+HZ \rightarrow R_3HN^+Z^-$

[HZ: $HBF_4$, $HPF_6$, $CH_3COOH$, $CF_3COOH$, $CF_3SO_3H$, $(CF_3SO_2)_2NH$, $(CF_3SO_2)_3CH$, $(C_2F_5SO_2)_2NH$ organic acid such as]

The aforementioned R in (1) to (16) represents hydrogen or a hydrocarbon group of a carbon number of 1 to 20, and a part of the hydrocarbon group may be functional group substituted with a hetero atom.

The ionic liquids may be used alone or in form of a mixture of two or more thereof.

The content of the ionic compound to 100 parts by weight of the (meth) acryl-based polymer is preferably 1 part by weight or less, more preferably 0.001 to 0.9 parts by weight, and furthermore preferably 0.005 to 0.8 parts by weight. It is preferred that the content is within the above-mentioned range since it is easy to achieve both antistatic property and low staining property.

It is preferable for the pressure-sensitive adhesive sheet of the present invention that the pressure-sensitive adhesive composition contains an organopolysiloxane. It is supposed that use of the organopolysiloxane can lower the surface free energy of the pressure-sensitive adhesive surface and make peeling easy at the time of high speed peeling (e.g., peeling rate of 30 m/min).

The organopolysiloxane used properly in the present invention is an organopolysiloxane having a conventionally known polyoxyalkylene main chain and preferably those defined by the following formula:

[Chemical Formula 8]

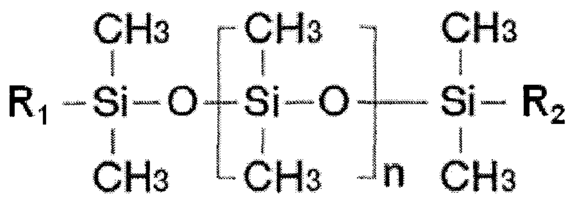

(wherein $R_1$ and/or $R_2$ have/has an oxyalkylene chain of 1 to 6 carbon atoms; an alkylene group in the oxyalkylene chain may be a straight or branched chain; the oxyalkylene chain may have an alkoxy or hydroxyl group at the terminal; either $R_1$ or $R_2$ may be a hydroxyl group or an alkyl group or an alkoxy group; the alkyl group and the alkoxy group may be functional groups partially substituted with a heteroatom; and n is an integer of 1 to 300).

The organopolysiloxane used is an organopolysiloxane in which a moiety containing siloxane (siloxane moiety) is a main chain and an oxyalkylene chain is bonded to the terminal of the main chain. It is supposed that use of the organosiloxane having the oxyalkylene chain makes it possible to keep balance of compatibility with the (meth) acryl-based polymer and the ionic compound and makes peeling easy.

It is possible to use, as the organopolysiloxane in the present invention, for Example, those with the following constitution. Specifically, $R_1$ and/or $R_2$ in the formula has an oxyalkylene chain containing a hydrocarbon group of 1 to 6 carbon atoms, and Examples of the oxyalkylene chain include an oxymethylene group,an oxyethylene group, an oxypropylene group, an oxybutylene group and the like. In particular, an oxyethylene group and an oxypropylene group are preferable. When both $R_1$ and $R_2$ have an oxyalkylene chain, they maybe the same or different.

[Chemical Formula 9]

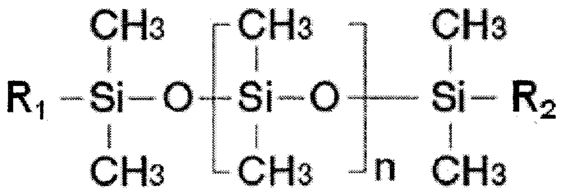

The hydrocarbon group of the oxyalkylene chain may be a straight or branched chain.

The terminal of the oxyalkylene chain may be either an alkoxy group or a hydroxyl group and is especially preferably an alkoxy group. In the case a separator is bonded to the surface of a pressure-sensitive adhesive layer for the purpose of protecting the pressure-sensitive surface, if an organopolysiloxane has a hydroxyl group at the terminal, an interaction with the separator occurs and thus the adhesion (peeling force) may sometimes increase at the time of peeling the separator off the surface of the pressure-sensitive adhesive layer.

The reference character n denotes an integer of 1 to 300, preferably 10 to 200, and more preferably from 20 to 150. If n is within the above-mentioned range, compatibility with a base polymer can be balanced well, resulting in a preferred embodiment. It is also possible to have a reactive substituent such as a (meth)acryloyl group, an allyl group, or a hydroxyl group in the molecule. The organopolysiloxane may be used alone or in form of a mixture of two or more thereof.

Specific Examples of the organopolysiloxane having the oxyalkylene chain include commercially available products such as X-22-4952, X-22-4272, X-22-6266, KF-6004, and KF-889 (all manufactured by Shin-Etsu Chemical Co., Ltd.); BY16-201 and SF8427 (all manufactured by Dow Corning Toray Co., Ltd.); and IM22 (manufactured by Wacker Asahikasei Silicone Co., Ltd.). These compounds may be used alone or in form of a mixture of two or more thereof.

It is also possible to use an organosiloxane having (bonded to) an oxyalkylene chain as a side chain other than the organosiloxane having (bonded to) an oxyalkylene chain as a main chain, and use of an organosiloxane having an oxyalkylene chain in a side chain rather than in a main chain is a more preferable embodiment. A conventionally known organopolysiloxane having a polyoxyalkylene side chain may be used properly as the organopolysiloxane, and those defined by the following formula are preferable:

[Chemical Formula 10]

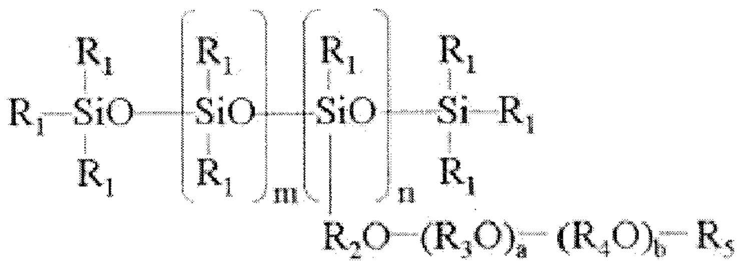

(wherein $R_1$ is a monovalent organic group; $R_2$, $R_3$ and $R_4$ are an alkylene group; $R_5$ is a hydroxyl group or an organic group; m and n are an integer of 0 to 1000 and are not simultaneously 0; and a and b are an integer of 0 to 100 and are not simultaneously 0).

Those used as the organopolysiloxane in the present invention have the following configuration, for Example specifically, in the formula, $R_1$ is a monovalent organic group, e.g., an alkyl group such as a methyl group, an ethyl group, or a propyl group, an aryl group such as a phenyl group or a tolyl group; or an aralkyl group such as a benzyl group or a phenethyl group, all of which may have a substituent such as a hydroxyl group. $R_2$, $R_3$, and $R_4$ may be an alkylene group of 1 to 8 carbon atoms such as a methylene group, an ethylene group, or a propylene group. In addition, $R_3$ and $R_4$ are different alkylene groups and $R_2$ may be same as or different from $R_3$ or $R_4$. Either one of $R_3$ and $R_4$ is preferably an ethylene group or a propylene group in order to increase the concentration of an ionic compound soluble in the polyoxyalkylene side chain of the organopolysiloxane. $R_5$ may be a monovalent organic group, e.g., an alkyl group such as a methyl group, an ethyl group, or a propyl group, or an acyl group such as an acetyl group or a propionyl group, which may respectively have a substituent such as a hydroxyl group. These compounds may be used alone or in form

of a mixture of two or more thereof. These compounds may have a reactive substituent such as a (meth) acryloyl group, an allyl group, or a hydroxyl group in the molecule. An organosiloxane having a polyoxyalkylene side chain having a hydroxyl group at the terminal is particularly preferable among the organosiloxanes having a polyoxyalkylene side chain since it is supposed that the compatibility can be easily well balanced.

[Chemical Formula 11]

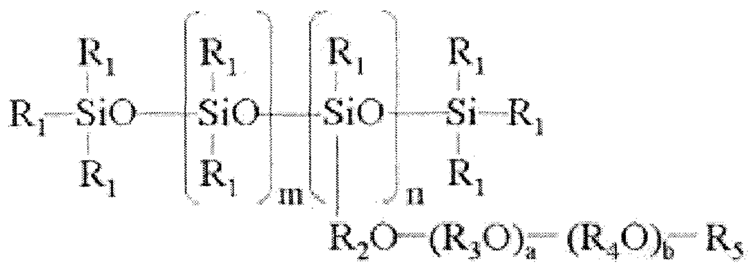

Specific Examples of the organosiloxane include commercially available productssuch asKF- 351A, KF- 352A, KF- 353, KF- 354L, KF- 355A, KF- 615A, KF- 945, KF- 640, KF- 642, KF- 643, KF- 6022, X- 22- 6191, X- 22- 4515, KF- 6011, KF- 6012, KF- 6015, KF- 6017, and X- 22- 2516 (all manufactured by Shin- Etsu Chemical Co., Ltd.) ; SF8428, FZ- 2162, SH3749, FZ- 77, L- 7001, FZ- 2104, FZ- 2110, L- 7002, FZ- 2122, FZ- 2164, FZ- 2203, FZ- 7001, SH8400, SH8700, SF8410, andSF8422 (all manufactured by Dow Corning Toray Co., Ltd.) ; TSF- 4440, TSF- 4441, TSF- 4445, TSF- 4450, TSF- 4446, TSF- 4452, and TSF- 4460 (all manufactured by Momentive Performance Materials Inc.) ; and BYK- 333, BYK- 307, BYK- 377, BYK- UV3500, and BYK- UV3570 (all manufactured by BYK Japan KK) . These compounds may be used alone or in form of a mixture of two or more thereof.

The organosiloxane used in the present invention has an HLB (Hydrophile-Lipophile Balance) value of preferably 1 to 16 and more preferably 3 to 14. If the HLB value is out of the range, the staining property to the adherend is worsened and thus it is not preferable.

The content of the organopolysiloxane to 100 parts by weight of the (meth) acryl- based polymer is preferably 0.01 to 5 parts by weight, more preferably 0.03 to 3 parts by weight, and furthermore preferably 0.05 to 1 part by weight. It is preferred that the content is within the above- mentioned range since it is easy to achieve both antistatic property and easy peeling (re- peeling) property.

It is preferable for the pressure-sensitive adhesive sheet of the present invention that the pressure-sensitive adhesive composition contains a crosslinking agent. In the present invention, the pressure-sensitive adhesive composition is used for forming a pressure-sensitive adhesive layer. By appropriately adjusting selection of the structural units and component ratio of the (meth) acryl-based polymer, selection of the crosslinking agent, and the addition ratio of the crosslinking agent and performing crosslinking, a pressure-sensitive adhesive sheet (pressure-sensitive adhesive layer) with more excellent heat resistance can be obtained.

The crosslinking agent used in the present invention may be an isocyanate compound, an epoxy compound, a melamine resin, an aziridine derivative, a metal chelate compound, or the like. Inparticular, an isocyanate compoundispreferablyused. These compounds may be used alone or in a mixture of two or more.

Examples of the isocyanate compound include aliphatic polyisocyanates such as trimethylene diisocyanate, butylene diisocyanate, hexamethylene diisocyanate (HDI), and dimer acid diisocyanate; aliphatic isocyanates such as cyclopentylene diisocyanate, cyclohexylene diisocyanate, and isophorone diisocyanate (IPDI) ; aromatic isocyanates such as 2, 4- tolylene diisocyanate, 4, 4'- diphenylmethanediisocyanate, and xylylene diisocyanate (XDI) ; and modified polyisocyanates obtained by modifying the above- mentioned isocyanate compounds by allophanate bonding, biuret bonding, isocyanurate bonding, uretdione bonding, urea bonding, carbodiimide bonding, uretimine bonding, oxadiazinetrione bonding, and the like. For Example, commercially available products such as TAKENATE 300S, TAKENATE 500, TAKENATE D165N, and TAKENATE D178N (all manufactured by Takeda Pharmaceutical Co., Ltd.), Sumidur T80, SumidurL, and Desmodur N3400 (all manufactured by Sumitomo Bayer Urethane Co., Ltd.) ; and Millionate MR, Millionate MT, Coronate L, Coronate HL, and Coronate HX (all manufactured by Nippon Polyurethane Industry Co., Ltd.) can be mentioned. These isocyanate compounds may be used alone or in form of a mixture of two or more thereof. It is also possible to use a bifunctional isocyanate compound and a tri- or higher functional isocyanate compound in combination. Combination use of crosslinking agents makes it possible to achieve both pressure- sensitive adhesive property and resilient resistance (tackinesstoacurved face) and to obtain a pressure- sensitive adhesive sheet more excellent in adhesion reliability.

Examples of the epoxy compound include N, N, N' , N'- tetraglycidyl- m- xylenediamine (trade name TETRAD-X, manufactured by Mitsubishi Gas Chemical Company, Inc.) and 1, 3- bis (N, N- diglycidylaminomethyl) cyclohexane (trade name TETRAD- C, manufactured by Mitsubishi Gas Chemical Company, Inc.) .

Examples of the melamine resin include hexamethylolmelamine. Examples of the aziridine derivative include commercially available products such as HDU, TAZM, and TAZO (all manufactured by Sogo Pharmaceutical Co., Ltd.).

Metal chelate compounds include a metal component such as aluminum, iron, tin, titanium and nickel and a chelate component such as acetylene, methyl acetoacetate, and ethyl lactate.

The content of the crosslinking agent used in the present invention to 100 parts byweight of the (meth) acryl-based polymer is preferably 0.01 to 10 parts by weight, more preferably 0.1 to 8 parts by weight, furthermore preferably 0.5 to 5 parts by weight, and most preferably 1.0 to 2.5 parts by weight. If the content is less than 0.01 parts by weight, the crosslinking agent may insufficiently form a crosslink, so that the cohesive strength of the pressure-sensitive adhesive composition may be low, which may make it impossible to obtain sufficient heat resistance or tend to cause adhesive residue. On the other hand, if the content is more than 10 parts by weight, the polymer may have a high cohesive strength to reduce fluidity, so that the wettability on a polarizing plate may be insufficient, which may tend to cause blister between the polarizing plate and the pressure-sensitive adhesive composition layer. These crosslinking agents may be used alone or in form of a mixture of two or more thereof.

The pressure- sensitive adhesive composition may further contain a crosslinking catalyst for more effectively promoting one of the above- mentioned crosslinking reactions. Examples of those used as the crosslinking catalyst include tin- based catalysts such as dibutyltin dilaurate and dioctyltin dilaurate and iron- based catalysts such as tris (acetylacetonato) iron, tris (hexane- 2, 4- dionato) iron, tris (heptane- 2, 4- dionato) iron, tris (heptane- 3, 5- dionato) iron, tris (5- methylhexane- 2, 4- dionato) iron, tris (octane- 2, 4- dionato) iron, tris (6- methylheptane- 2, 4- dionato) iron, tris (2, 6- dimethylheptane- 3, 5- dionato) iron, tris (nonane- 2, 4- dionato) iron, tris (nonane- 4, 6- dionato) iron, tris (2, 2, 6, 6- tetramethylheptane- 3, 5- dionato) iron, tris (tridecane- 6, 8- dionato) iron, tris (1- phenylbutane- 1, 3- dionato) iron, tris (hexafluoroacetylacetonato) iron, tris (acetoacetic acid ethyl ester) iron, tris (acetoacetic acid- n- propyl ester) iron, tris (acetoacetic acid isopropyl ester) iron, tris (acetoacetic acid- n- butyl ester) iron, tris (acetoacetic acid sec- butyl ester) iron, tris (acetoacetic acid- tert- butyl ester) iron, tris (propionylacetic acid methyl ester) iron, tris (propionylacetic acid ethyl ester) iron, tris (propionylacetic acid- n- propyl ester) iron, tris (propionylacetic acid isopropyl ester) iron, tris (propionylacetic acid- n- butyl ester) iron, tris (propionylacetic acid sec- butyl ester) iron, tris (propionylacetic acid tert-butyl ester) iron, tris (benzyl acetoacetate) iron, tris (malonic acid dimethyl ester) iron, tris (malonic acid diethyl ester) iron, trimethoxyiron, triethoxyiron, triisopropoxyiron, and ferric chloride. These crosslinking catalysts may be used alone or in form of a mixture of two or more thereof.

The content (use amount) of the crosslinking catalyst is not particularly limited and preferably about 0.0001 to 1 part by weight and more preferably 0.001 to 0.5 parts by weight to 100 parts by weight of the (meth) acryl- based polymer. If it is within the above- mentioned range, the crosslinking reaction speed is high at the time of forming the pressure- sensitive adhesive layer and the pot life of the pressure- sensitive adhesive composition is prolonged, resulting in a preferable embodiment.

The pressure-sensitive adhesive composition of the present invention may contain a polyoxyalkylene chain-containing compound excluding an organopolysiloxane. Addition of the compound to the pressure-sensitive adhesive composition can provide the pressure-sensitive adhesive composition with more excellent wettability to an adherend.

Specific Examples of the polyoxyalkylene chain-containing compound excluding an organopolysiloxane include nonionic surfactants such as polyoxyalkylenealkylamine, polyoxyalkylenediamine, polyoxyalkylene fatty acid ester, polyoxyalkylenesorbitan fatty acid ester, polyoxyalkylene alkyl phenyl ether, polyoxyalkylene alkyl ether, polyoxyalkylene alkyl allyl ether, and polyoxyalkylene alkyl phenyl allyl ether; anionic surfactants such as polyoxyalkylene alkyl ether sulfuric acidester salt, polyoxyalkylene alkyl ether phosphoric acid ester salt, polyoxyalkylene alkyl phenyl ether sulfuric acid ester salt, and polyoxyalkylene alkyl phenyl ether phosphoric acid ester salt; cationic surfactants and amphoteric surfactants having a polyoxyalkylene chain (polyalkylene oxide chain), polyether compounds (including their derivatives) having a polyoxyalkylene chain, and acrylic compounds (including their derivatives) having a polyoxyalkylene chain. Further, a polyoxyalkylene chain-containing monomer may be added as the polyoxyalkylene chain-containing compound to an acryl-based polymer. These polyoxyalkylene chain-containing compounds may be used alone or in form of a mixture of two or more thereof.

Specific Examples of the polyoxyalkylene chain- containing polyether compounds include polypropylene glycol (PPG)- polyethylene glycol (PEG) block copolymers, PPG- PEG- PPG block copolymers, and PEG- PPG- PEG block copolymers. Examples of the polyoxyalkylene chain- containing polyether compound derivatives include terminal- etherified oxypropylene group- containing compounds (PPG monoalkyl ether, PEG- PPG monoalkyl ether, etc.), and terminal- acetylated oxypropylene group- containing compounds (terminal- acetylated PPG, etc.) .

Specific Examples of the polyoxyalkylene chain-containing acrylic compounds include oxyalkylene group-containing (meth)acrylate polymers. The number of moles added of an oxyalkylene unit for the oxyalkylene group is preferably 1 to 50, more preferably 2 to 30, and furthermore preferably 2 to 20 in terms of coordination of the ionic compound. The

terminal of the oxyalkylene chain may be a hydroxyl group as it is or substituted with an alkyl group, a phenyl group, or the like.

The oxyalkylene group- containing (meth) acrylate polymers are preferably polymers containing (meth) acrylic acid alkylene oxide as a monomer unit (component) . Specific Examples of the (meth) acrylic acid alkylene oxide include, as ethylene glycol group- containing (meth) acrylate, methoxy- polyethylene glycol (meth) acrylate types such as methoxy-diethylene glycol (meth) acrylate and methoxy- triethylene glycol (meth) acrylate; ethoxy- polyethylene glycol (meth) acrylate types such as ethoxy- diethylene glycol (meth) acrylate and ethoxy- triethylene glycol (meth) acrylate; butoxy-polyethylene glycol (meth) acrylate types such as butoxy- diethylene glycol (meth) acrylate and butoxy- triethylene glycol (meth) acrylate; phenoxy- polyethylene glycol (meth) acrylate types such as phenoxy- diethylene glycol (meth) acrylate and phenoxy- triethylene glycol (meth) acrylate; 2- ethylhexyl- polyethylene glycol (meth) acrylate, nonylphenol- polyethylene glycol (meth) acrylate type, and methoxy- polypropylene glycol (meth) acrylate types such as methoxy- dipropylene glycol (meth) acrylate.

Other monomer units (components) other than the (meth) acrylic acid alkylene oxide may be used as the monomer unit (component) . Specific Examples of other monomer components include acrylates and/or methacrylatea having an alkyl group of 1 to 14 carbon atoms such as methyl (meth) acrylate, ethyl (meth) acrylate, n- butyl (meth) acrylate, sec- butyl (meth) acrylate, tert- butyl (meth) acrylate, isobutyl (meth) acrylate, hexyl (meth) acrylate, 2- ethylhexyl (meth) acrylate, n- octyl (meth) acrylate, isooctyl (meth) acrylate, n- nonyl (meth) acrylate, isononyl (meth) acrylate, n-decyl (meth) acrylate, isodecyl (meth) acrylate, n- dodecyl (meth) acrylate, n- tridecyl (meth) acrylate, and n- tetradecyl (meth) acrylate.

Further, it is also possible to properly use carboxyl group- containing (meth) acrylate, phosphoric acid group-containing (meth) acrylate, cyano group- containing (meth) acrylate, vinyl esters, aromatic vinyl compounds, acid anhydride group- containing (meth) acrylate, hydroxyl group- containing (meth) acrylate, amide group- containing (meth) acrylate, amino group- containing (meth) acrylate, epoxy group- containing (meth) acrylate, N- acryloylmorpholine, and vinyl ethers as other monomer units (components) other than the (meth) acrylic acid alkylene oxide.

In a more preferred embodiment, the polyoxyalkylene chain-containing compound excluding an organopolysiloxane is a compound which at least partially has a (poly) ethylene oxide chain. Addition of the (poly)ethylene oxide chain-containing compound improves compatibility between a base polymer and an antistatic component and suppresses bleeding to the adherend successfully and thus gives a pressure-sensitive adhesive composition with a low staining property. In particular, in the case of using a PPG-PEG-PPG block copolymer, a pressure-sensitive adhesive composition excellent in the low staining property can be obtained. In the polyethylene oxide chain-containing compound, the weight ratio of the (poly)ethylene oxide chain to the total weight of the polyoxyalkylene chain-containing compound excluding an organopolysiloxane is preferably 5 to 90 wt.%, more preferably 5 to 85 wt.%, furthermore preferably 5 to 80 wt.%, and most preferably 5 to 75 wt.%.

The polyoxyalkylene chain-containing compound excluding an organopolysiloxane has a number average molecular weight (Mn) of suitably 50,000 or less, preferably 200 to 30,000, more preferably 200 to 10,000. Usually, those having a number average molecular weight of 200 to 5,000 are suitably used. If Mn is excessively larger than 50,000, the compatibility with an acryl-based polymer tends to be lowered, resulting in whitening of the pressure-sensitive adhesive layer. If Mn is excessively smaller than 200, staining with the polyoxyalkylene compound may be likely to occur. Herein, Mn refers to a polystyrene-equivalent value measured by GPC (gel permeation chromatography).

Specific Examples of commercially available products of the polyoxyalkylene chain-containing compound excluding an organopolysiloxane include ADEKA Pluronic 17R-4 and ADEKA Pluronic 25R-2 (both manufactured by ADEKA); and Emulgen 120 (manufactured by KAO Corporation).

The amount of addition of the polyoxyalkylene chain-containing compound excluding an organopolysiloxane can be adjusted to, for Example, 0.005 to 20 parts by weight, preferably 0.01 to 10 parts by weight, more preferably 0.05 to 5 parts by weight, and most preferably 0.1 to 1 part by weight to 100 parts by weight of the acryl-based polymer. If the amount of addition is too small, the effect of preventing bleeding of an antistatic component may be lowered and on the other hand, if the content is too large, staining with the polyoxyalkylene compound may be likely to occur.

The pressure- sensitive adhesive composition may contain an acrylic oligomer. The weight average molecular weight of the acrylic oligomer is preferably 1, 000 or more and less than 30, 000, more preferably 1, 500 or more and less than 20, 000, and furthermore preferably 2, 000 or more and less than 10, 000. The acrylic oligomer is a (meth) acryl- based polymer containing, as a monomer unit, a (meth) acryl- based monomer having an alicyclic structure defined by the following formula (1) and in the case of using the acrylic oligomer as an acryl- based pressure- sensitive adhesive composition for re- peeling in this embodiment, the acrylic oligomer works as a tackifier resin, improves the tackiness, and is effective for suppressing blistering of the pressure- sensitive adhesive sheet.

$$CH_2=C(R^1)COOR^2 \qquad (1)$$

[In the formula (1), $R^1$ is a hydrogen atom or a methyl group; and $R^2$ is an alicyclic hydrocarbon group having an alicyclic

structure.]

Examples of the alicyclic hydrocarbon group $R^2$ in the formula (1) include alicyclic hydrocarbon groups such as a cyclohexyl group, an isobornyl group, and a dicyclopentanyl group. Examples of a (meth)acrylic acid ester having the alicyclic hydrocarbon group include (meth) acrylic acid aliphatic alcohol esters such as cyclohexyl (meth) acrylate containing a cyclohexyl group, isobornyl (meth) acrylate containing an isobornyl group, and dicyclopentanyl (meth) acrylate having a dicyclopentanyl group. Since the acrylic oligomer contains such an acryl-based monomer having a relatively bulky structure as a monomer unit, the tackiness can be improved.

In this embodiment, the alicyclic hydrocarbon group composing the acrylic oligomer preferably has a bridged cyclic structure. The bridged cyclic structure means a tri- or higher alicyclic structure. Since the acrylic oligomer is provided with a bulky structure such as the bridged cyclic structure, the tackiness of the acrylic pressure-sensitive adhesive composition for re-peeling (acrylic pressure-sensitive adhesive sheet for re-peeling) can be improved more.

Examples of $R^2$, which is an alicyclic hydrocarbon group having the bridged cyclic structure, include a dicyclopentanyl group defined by the following formula (3a), a dicyclopentenyl group defined by the following formula (3b), an adamantyl group defined by the following formula (3c), a tricyclopentanyl group defined by the following formula (3d), and a tricyclopentenyl group defined by the following formula (3e) . In the case UV polymerization is employed at the time of synthesizing an acrylic oligomer or producing a pressure- sensitive adhesive composition, in terms of scarcity of polymerization inhibition, especially, (meth) acryl- based monomers having a saturated structure such as a dicyclopentanyl group definedby the following formula (3a), an adamantyl group defined by the following formula (3c), and a tricyclopentanyl group defined by the following formula (3d) are preferably used as a monomer composing the acrylic oligomer among these (meth) acryl- based monomers having a tri- or higher alicyclic structure having the bridged cyclic structure.

[Chemical Formula 12]

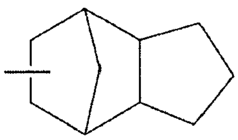

(3a)

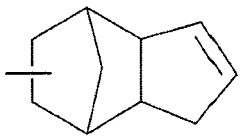

(3b)

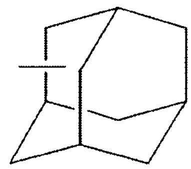

(3c)

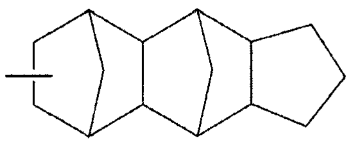

(3d)

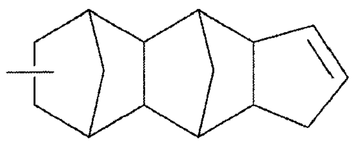

(3e)

Examples of the (meth) acryl- based monomer having a tri- or higher alicyclic structure having a bridged cyclic structure include (meth) acrylic acid esters such as dicyclopentanyl methacrylate, dicyclopentanyl acrylate, dicyclopentanyloxyethyl methacrylate, dicyclopentanyloxyethyl acrylate, tricyclopentanyl methacrylate, tricyclopentanyl acrylate, 1- adamantyl methacrylate, 1- adamantyl acrylate, 2- methyl- 2- adamantyl methacrylate, 2- methyl- 2- adamantyl acrylate, 2- ethyl- 2- adamantyl methacrylate, and 2- ethyl- 2- adamantyl acrylate. These (meth) acryl- based monomers may be used alone or in combination of two or more thereof.

The acrylic oligomer in this embodiment may be a homopolymer of a (meth) acryl- based monomer having an alicyclic structure or a copolymer of a (meth) acryl- basedmonomer having an alicyclic structure with another (meth) acrylic acid ester monomer or a copolymerizable monomer.

Examples of the (meth) acrylic acid ester monomer include:

(meth) acrylic acid alkyl esters such as methyl (meth) acrylate, ethyl (meth) acrylate, propyl (meth) acrylate, isopropyl

(meth) acrylate, butyl (meth) acrylate, isobutyl (meth) acrylate, sec- butyl (meth) acrylate, tert- butyl (meth) acrylate, pentyl (meth) acrylate, isopentyl (meth) acrylate, hexyl (meth) acrylate, 2- ethylhexyl (meth) acrylate, heptyl (meth) acrylate, octyl (meth) acrylate, isooctyl (meth) acrylate, nonyl (meth) acrylate, isononyl (meth) acrylate, decyl (meth) acrylate, isodecyl (meth) acrylate, undecyl (meth) acrylate, and dodecyl (meth) acrylate;
(meth)acrylic acid aryl esters such as phenyl (meth)acrylate and benzyl (meth)acrylate; and
(meth)acrylic acid esters derived from terpene compound derivative alcohols. These (meth)acrylic acid esters may be used alone or in combination of two or more thereof.

The acrylic oligomer may be obtained by copolymerization of other monomer components (copolymerizable monomers) copolymerizable with a (meth) acrylic acid ester other than the (meth)acrylic acid ester component units.
Examples of other monomers copolymerizable with a (meth)acrylic acid ester include:

carboxyl group-containing monomers such as acrylic acid, methacrylic acid, carboxyethyl acrylate, carboxypentyl acrylate, itaconic acid, maleic acid, fumaric acid, crotonic acid, and iso-crotonic acid;
alkoxyalkyl (meth) acrylate monomers such as methoxyethyl (meth) acrylate, ethoxyethyl (meth) acrylate, propoxyethyl (meth) acrylate, butoxyethyl (meth) acrylate, and ethoxypropyl (meth) acrylate;
(meth)acrylic acid alkali metal salts;
(poly) alkylene glycol di (meth) acrylic acid ester monomers such as ethylene glycol di (meth) acrylic acid ester, diethylene glycol di(meth)acrylic acid ester, triethylene glycol di(meth)acrylic acid ester, polyethylene glycol di(meth) acrylic acid ester, propylene glycol di(meth)acrylic acid ester, dipropylene glycol di (meth) acrylic acid ester, and tripropylene glycol di(meth)acrylic acid ester;
poly(meth)acrylic acid ester monomers such as trimethylolpropane tri(meth)acrylic acid ester;
vinyl esters such as vinyl acetate and vinyl propionate;
halogenated vinyl compounds such as vinylidene chloride and 2-chloroethyl (meth)acrylate;
oxazoline group- containing polymerizable compounds such as 2- vinyl- 2- oxazoline, 2- vinyl- 5- methyl- 2- oxazoline, and 2- isopropenyl- 2- oxazoline;
aziridine group-containing polymerizable compounds such as (meth)acryloylaziridine and 2-aziridinylethyl (meth) acrylate;
epoxy group- containing vinyl monomers such as allyl glycidyl ether, (meth) acrylic acid glycidyl ether, and 2-ethylglycidyl ether- (meth) acrylate;
hydroxyl group- containing vinyl monomers such as 2- hydroxyethyl (meth) acrylate, 2- hydroxypropyl (meth) acrylate, and adducts of lactones and 2- hydroxyethyl (meth) acrylate;
macromonomersobtainedbybondinganunsaturatedgroupsuch as a (meth)acryloyl group, a styryl group, or a vinyl group to the end of a polyalkylene glycol such as polypropylene glycol, polyethylene glycol, polytetramethylene glycol, polybutylene glycol, polyethylene glycol-polypropylene glycol copolymers, and polybutylene glycol-polyethylene glycol copolymers;
fluorine-containing vinyl monomers such as fluorine-substituted alkyl (meth)acrylic acid alkyl esters;
acid anhydride group-containing monomers such as maleic anhydride and itaconic anhydride;
aromatic vinyl compound monomers such as styrene, $\alpha$-methylstyrene, and vinyltoluene;
reactive halogen-containing vinyl monomers such as 2-chloroethyl vinyl ether and vinyl monochloroacetate;
amide group- containing vinyl monomers such as (meth) acrylamide, N- isopropyl (meth) acrylamide, N- butyl (meth) acrylamide, N, N- diethyl (meth) acrylamide, N, N- dimethyl (meth) acrylamide, N- methylol (meth) acrylamide, N-ethylol (meth) acrylamide, N- methylolpropane (meth) acrylamide, N- methoxyethyl (meth) acrylamide, N- butoxymethyl (meth) acrylamide, and N- acryloylmorpholine;
succinimide monomers such as N- (meth) acryloyloxymethylenesuccinimide, N- (meth) acryloyl- 6- oxyhexamethylenesuccinimide, and N- (meth) acryloyl- 8- oxyhexamethylenesuccinimide;
maleimide monomers such as N-cyclohexylmaleimide, N-isopropylmaleimide, N-laurylmaleimide, and N-phenylmaleimide;
itaconimide monomers such as N- methylitaconimide, N- ethylitaconimide, N- butylitaconimide, N- octylitaconimide, N- 2- ethylhexylitaconimide, N- cyclohexylitaconimide, and N- laurylitaconimide;
nitrogen- containing heterocyclic monomers such as N- vinyl- 2- pyrrolidone, N- methylvinylpyrrolidone, N- vinylpyridine, N- vinylpiperidone, N- vinylpyrimidine, N- vinylpiperazine, N- vinylpyrazine, N- vinylpyrrole, N- vinylimidazole, N- vinyloxazole, N- (meth) acryloyl- 2- pyrrolidone, N- (meth) acryloylpiperidine, N- (meth) acryloylpyrrolidine, N-vinylmorpholine, N- vinylpyrazole, N- vinylisoxazole, N- vinylthiazole, N- vinylisothiazole, and N- vinylpyridazine;
N-vinylcarboxylic acid amides;
lactam monomers such as N-vinylcaprolactam;
cyanoacrylate monomers such as (meth)acrylonitrile;
aminoalkyl (meth) acrylate monomers such as aminoethyl (meth) acrylate, N, N- dimethylaminoethyl (meth) acrylate,

N, N- dimethylaminoethyl (meth) acrylate, and tert- butylaminoethyl (meth) acrylate;
imide group-containing monomers such as cyclohexylmaleimide and isopropylmaleimide;
isocyanate group-containing monomers such as 2-isocyanatoethyl (meth)acrylate;
organosilicon- containing vinyl monomers such as vinyltrimethoxysilane, γ- methacryloxypropyltrimethoxysilane, allyltrimethoxysilane, trimethoxysilylpropylallylamine, and 2- methoxyethoxytrimethoxysilane;
hydroxyl group- containing monomers such as hydroxyalkyl (meth) acrylates such as hydroxyethyl (meth) acrylate, hydroxypropyl (meth) acrylate, hydroxybutyl (meth) acrylate, hydroxyhexyl (meth) acrylate, hydroxyoctyl (meth) acrylate, hydroxydecyl (meth) acrylate, hydroxylauryl (meth) acrylate, and (4- hydroxymethylcyclohexyl) methyl methacrylate;
acrylic acid ester monomers having a heteroring, a halogen atom, a silicon atom or the like such as tetrahydrofurfuryl (meth) acrylate, fluorine atom- containing (meth) acrylate, and silicone (meth) acrylate;
olefin monomers such as isoprene, butadiene, and isobutylene;
vinyl ether monomers such as methyl vinyl ether and ethyl vinyl ether;
olefins or dienes such as ethylene, butadiene, isoprene, and isobutylene;
vinyl ethers such as vinyl alkyl ether;
vinyl chloride; and
macromonomers having a radical polymerizable vinyl group at the terminal and obtained by polymerizing vinyl monomers. These monomers can be used alone or in combination for copolymerization with the (meth)acrylic acid ester.

Examples of the acrylic oligomer include cyclohexyl methacrylate (CHMA)- isobutyl methacrylate (IBMA) copolymers, cyclohexyl methacrylate (CHMA)- isobornyl methacrylate (IBXMA) copolymers, methyl methacrylate (MMA)- isobornyl methacrylate (IBXMA) copolymers, cyclohexyl methacrylate (CHMA)- acryloylmorpholine (ACMO) copolymers, cyclohexyl methacrylate (CHMA)- diethylacrylamide (DEAA) copolymers, 1- adamantylacrylate (ADA)- methylmethacrylate (MMA) copolymers, dicyclopentanyl methacrylate (DCPMA)- isobornyl methacrylate (IBXMA) copolymers, dicyclopentanyl methacrylate (DCPMA)- methyl methacrylate (MMA) copolymers, dicyclopentanyl methacrylate (DCPMA)- N- vinyl- 2- pyrrolidone (NVP) copolymers, dicyclopentanyl methacrylate (DCPMA)- hydroxyethyl methacrylate (HEMA) copolymers, dicyclopentanyl methacrylate (DCPMA)- acrylic acid (AA) copolymers, and homopolymers of dicyclopentanyl methacrylate (DCPMA), cyclohexyl methacrylate (CHMA), isobornyl methacrylate (IBXMA), isobornyl acrylate (IBXA), dicyclopentanyl acrylate (DCPA), 1- adamantyl methacrylate (ADMA), 1- adamantyl acrylate (ADA), and methyl methacrylate (MMA) .

Further, a functional group having reactivity on an epoxy group or an isocyanate group may be introduced into the acrylic oligomer. Examples of the functional group include a hydroxyl group, a carboxyl group, an amino group, an amide group, and a mercapto group and a monomer having the functional group may be used (copolymerized) at the time of producing the acrylic oligomer.

In the case the acrylic oligomer is a copolymer of a (meth) acryl- based monomer having an alicyclic structure with another (meth) acrylic acid ester monomer or a copolymerizable monomer, the content of the (meth) acryl- based monomer having an alicyclic structure is preferably 5 wt. % or more, more preferably 10 wt. % or more, furthermore preferably 20 wt. % or more, and even more preferably30 wt. % or more (usually less than 100 wt. % and preferably 90 wt. % or less) in all the monomers composing the acrylic oligomer. If 5 wt. % or more of the (meth) acryl- based monomer having an alicyclic structure is contained, the tackiness can be improved without lowering the transparency.

The weight average molecular weight of the acrylic oligomer is 1,000 or more and less than 30,000, preferably 1, 500 or more and less than 20, 000, and more preferably 2, 000 or more and less than 10,000. If the weight average molecular weight is more than 30,000, the tackiness is lowered. On the other hand, if the weight average molecular weight is less than 1, 000, because of the low molecular weight, it results in lowering of the adhesion of the pressure-sensitive adhesive sheet.

Further, the pressure- sensitive adhesive composition used for the pressure- sensitive adhesive sheet of the present invention may contain other conventionally known additives as needed, for Example, a powder of a coloring agent, a pigment or the like, a surfactant, a plasticizer, a tackifier, a low molecular weight polymer, a surface lubricant, a leveling agent, an antioxidant, a corrosion preventing agent, a photostabilizer, an ultraviolet absorbing agent, a polymerization inhibitor, a silane coupling agent, an inorganic or organic filler, a metal powder, granules, foils and others, according to utility.

The pressure-sensitive adhesive sheet of the present invention is obtained by forming the pressure-sensitive adhesive layer on a supporting film. At this time, crosslinking of the pressure-sensitive adhesive composition is usually carried out after application of the pressure-sensitive adhesive composition, but it is also possible to transfer the pressure-sensitive adhesive layer containing the crosslinked pressure-sensitive adhesive composition to a supporting film or the like.

A method for forming the pressure-sensitive adhesive layer on the supporting film may be any appropriate

method. ForExample, the pressure-sensitive adhesive composition is applied to a supporting film and a polymerization solvent or the like is dried out and removed to form the pressure-sensitive adhesive layer on the supporting film and thus, the pressure-sensitive adhesive sheet is produced. Thereafter, thepressure-sensitiveadhesive layer may be cured for the purpose of adjusting the component migration and the crosslinking reaction. Further, in the case of producing the pressure-sensitive adhesive sheet by applying the pressure-sensitive adhesive composition to a supporting film, one or more kinds of solvents may be added besides the polymerization solvent to the pressure-sensitive adhesive composition in order to evenly apply the composition to the supporting film.

At the time of manufacturing the pressure-sensitive adhesive sheet of the present invention, conventionally known methods employed for manufacturing pressure-sensitive adhesive tapes may be used to form the pressure-sensitive adhesive layer. Specific Examples thereof include roll coating, gravure coating, reverse coating, roll blush, spray coating, air knife coating, and extrusion coating using a die coater or the like.

The pressure-sensitive adhesive sheet of the present invention is usually formed in a manner that the thickness of the pressure-sensitive adhesive layer is 3 to 100 μm, preferably about 5 to 50 μm. If the thickness of the pressure-sensitive adhesive layer is within the range, moderate balance of the re-peeling property and the tackiness can be obtained and therefore, it is preferable. The pressure-sensitive adhesive sheet is obtained by forming the pressure-sensitive adhesive layer by coating on one or both surfaces of various kinds of supporting films made of a plastic film such as a polyester film or a porous material such as paper or nonwoven fabric and forming the resultant into a sheet-like form, a tape-like form, etc.

The thickness of the supporting film composing the pressure-sensitive adhesive sheet of the prevent invention is usually 5 to 200 μm and preferably about 10 to 100 μm. If the thickness of the supporting film is within the range, the workability of bonding to an adherend and the workability of peeling off an adherend are excellent and therefore, it is preferable.

The supporting film may be subjected to releasing or anti-staining treatment with a silicone, fluorine, long chain alkyl-based, or fatty acid amide-based releasing agent or with a silica powder, easy adhesion treatment such as acid treatment, alkali treatment, primer treatment, corona treatment, plasma treatment, or ultraviolet ray treatment, or coating type, kneading type, or deposition type antistatic treatment, if necessary.

In the case of using the pressure-sensitive adhesive sheet of the present invention as a surface protecting film, the pressure-sensitive adhesive layer is formed on one or both surfaces of the supporting film, and it is preferable that the supporting film is a plastic film subjected to antistatic treatment. Use of such a supporting film suppresses electrification of the surface protecting film per se at the time of peeling and therefore it is preferable. Since the pressure-sensitive adhesive sheet includes the pressure-sensitive adhesive layer (in which an antistatic agent or the like is used) formed by crosslinking the pressure-sensitive adhesive composition having the advantageous effects as described above, the pressure-sensitive adhesive sheet prevents electrification of an object to be protected which is not protected from electrification at the time of peeling and the pressure-sensitive adhesive sheet can serve as a surface protecting film for an object to be protected with suppressed staining. Therefore, the pressure-sensitive adhesive sheet is very useful as an antistatic surface protecting film in technical fields related to optical and electronic components where electrification and staining are particularly serious problems. When the supporting film is a plastic film and the plastic film is subjected to antistatic treatment, those which suppress electrification of the surface protecting film per se and are excellent in the antistatic property to the object to be protected can be obtained.

The supporting film is preferably a plastic film having heat resistance, solvent resistance, and flexibility. When the supporting film has flexibility, the pressure-sensitive adhesive composition can be applied using a roll coater or the like, and the product can be wound into a roll.

The plastic film is not particularly limited as far as it can be formed into a sheet or a film, and Examples include a polyolefin film such as polyethylene, polypropylene, poly- 1- butene, poly- 4- methyl- 1- pentene, an ethylene·propylene copolymer, an ethylene·1- butene copolymer, an ethylene·vinyl acetate copolymer, an ethylene·ethyl acrylate copolymer, and an ethylene·vinyl alcohol copolymer, a polyester film such as polyethylene terephthalate, polyethylene naphthalate, and polybutylene terephthalate, a polyacrylate film, a polystyrene film, a polyamide film such as nylon 6, nylon 6, 6, and partially aromatic polyamide, a polyvinyl chloride film, a polyvinylidene chloride film, and a polycarbonate film.

In the present invention, an antistatic treatment which is performed on the plastic film is not particularly limited, but for Example, a method of providing an antistatic layer on at least one side of a generally used substrate, or a method of kneading a kneading-type antistatic agent into a plastic film is used. Examples of a method of providing an antistatic layer on at least one side of a substrate include a method of coating an antistatic resin comprising an antistatic agent and a resin component, or an electrically conductive resin containing an electrically conductive polymer or an electrically conductive substance, and a method of depositing or plating an electrically conductive substance.

Examples of an electrification preventing agent contained in an electrification preventing resin include a cation-type electrification preventing agent having a cationic functional group such as a quaternary ammonium salt, a pyridinium salt, and a primary, secondary or tertiary amino group, an anion-type electrification preventing agent having an anionic functional group such as a sulfonic acid salt, a sulfuric acid ester salt, a phosphonic acid salt, and a phosphoric ester

salt, an amphoteric-type electrification preventing agent such as alkylbetain and a derivative thereof, imidazoline and a derivative thereof, and alanine and a derivative thereof, a nonion-type electrification preventing agent such as aminoalcohol and a derivative thereof, glycerin and a derivative thereof, and polyethylene glycol and a derivative thereof, and an ionic electrically conductive polymer obtained by polymerizing or copolymerizing a monomer having the aforementioned cation-type, anion-type, or amphoteric-type ionic electrically conductive group. These compounds may be used alone, or two or more of them may be used by mixing.

Specifically, Examples of the cation- type electrification preventing agent include a (meth) acrylate copolymer having a quaternary ammonium group such as an alkyl trimethylammmonium salt, acyloylamidopropyltrimethtylammonium methosulfate, an alkylbenzylmethylammonium salt, acyl choline chloride, and polydimethylaminoethyl methacrylate, a styrene copolymer having a quaternary ammonium group such as polyvinylbenzyltrimethylammonium chloride, and a diallylamine copolymer having a quaternary ammonium group such as polydiallyldimethylammonium chloride. The compounds may be used alone, or two or more kinds may be used by mixing.

Examples of the anion-type electrification preventing agent include an alkyl sulfonic acid salt, an alkylbenzenesulfonic acid salt, an alkyl sulfate ester salt, an alkyl ethoxy sulfate ester salt, an alkyl phosphate ester salt, and a sulfonic acid group-containing styrene copolymer. These compounds may be used alone, or two or more kinds may be used by mixing.

Examples of the amphoteric-type electrification preventing agent include alkylbetain, alkylimidazoliumbetain, and carbobetaingrafted copolymer. These compounds may be used alone, or two or more kinds may be used by mixing.

Examples of the nonion- type electrification preventing agent include fatty acid alkylolamide, di (2- hydroxyethyl) alkylamine, polyoxyethylenealkylamine, fatty acid glycerin ester, polyoxyethylene glycol fatty acid ester, sorbitan fatty acid ester, polyoxysorbitan fatty acid ester, polyoxyethylene alkyl phenyl ether, polyoxyethylene alkyl ether, polyethylene glycol, polyoxyethylenediamine, a copolymer consisting of polyether, polyester and polyamide, and methoxypolyethyleneglycol (meth) acrylate. These compounds may be used alone, or two or more kinds may be used by mixing.

Examples of the electrically conductive polymer include polyaniline, polypyrrole and polythiophene. These electrically conductive polymers may be used alone, or two or more kinds may be used by mixing.

Examples of the electrically conductive substance include tin oxide, antimony oxide, indium oxide, cadmium oxide, titanium oxide, zinc oxide, indium, tin, antimony, gold, silver, copper, aluminum, nickel, chromium, titanium, iron, covert, copper iodide, and an alloy and a mixture thereof. These electrically conductive substances may be used alone, or two or more kinds may be used by mixing.

As a resin component used in the electrification preventing resin and the electrically conductive resin, a generally used resin such as polyester, acryl, polyvinyl, urethane, melanine and epoxy is used. In the case of a polymer-type electrification preventing agent, it is not necessary that a resin component is contained. In addition, the electrification preventing resin component may contain compounds of a methylolated or alkylolated melanine series, a urea series, a glyoxal series, and an acrylamide series, an epoxy compound, or an isocyanate compound as a crosslinking agent.

An electrification preventing layer is formed, for Example, by diluting the aforementioned electrification preventing resin, electrically conductive polymer or electrically conductive resin with a solvent such as an organic solvent and water, and coating this coating solution on a plastic film, followed by drying.

Examples of an organic solvent used in formation of the electrification preventing layer include methyl ethyl ketone, acetone, ethyl acetate, tetrahydrofuran, dioxane, cyclohexanone, n-hexane, toluene, xylene, methanol, ethanol, n-propanol and isopropanol. These solvents may be used alone, or two or more kinds may be used by mixing.

As a coating method in formation of the electrification preventing layer, theknowncoatingmethodisappropriatelyused, and Examples include roll coating, gravure coating, reverse coating, roll brushing, spray coating, and air knife coating methods, an immersing and curtain coating method.

The thickness of the antistatic resin layer, the conductive polymer, and the conductive resin is usually 0.001 to 5 $\mu$m and preferably about 0.03 to 1 $\mu$m. If it is within the range, the possibility of deteriorating the heat resistance, solvent resistance, and flexibility of the plastic film is low and therefore, it is preferable.

Examples of a method for vapor deposition of the conductive substanceorplatingwiththeconductivesubstanceincludevacuum vapor deposition, sputtering, ion plating, chemical vapor deposition, spray pyrolysis, chemical plating, and electroplating methods.

The thickness of the electrically-conductive material layer is generally from 0.002 to 1 $\mu$m, preferably from 0.005 to 0.5 $\mu$m. Within the above range, the plastic film is less likely to degrade in heat resistance, solvent resistance and flexibility, which is preferred.

As the kneading-type antistatic agent, the aforementioned antistatic agent is appropriately used. The amount of the kneading-type antistatic agent to be blended is 20% by weight or less, preferably in a range of 0.05 to 10% by weight, based on the total weight of a plastic film. Within the above range, the plastic film is less likely to degrade in heat resistance, solvent resistance and flexibility, which is preferred. A kneading method is not particularly limited as far as it is a method by which the antistatic agent can be uniformly mixed into a resin used in a plastic film, but for Example, a heating roll, a Banbury mixer, a pressure kneader, and a biaxial kneading machine are used.

If necessary, in the pressure sensitive adhesive sheet and the surface protecting film of the present invention, a separator can be bonded to the surface of the pressure-sensitive adhesive layer for the purpose of protecting the pressure-sensitive adhesive surface.

The material to be used for forming the separator may be paper, a plastic film or the like. The plastic film is preferably used because of its good surface smoothness. Such a film may be of any type capable of protecting the pressure-sensitive adhesive layer, and Examples thereof include a polyethylene film, a polypropylene film, a polybutene film, a polybutadiene film, a polymethylpentene film, a poly (vinyl chloride) film, a vinyl chloride copolymer film, a poly (ethylene terephthalate) film, a poly(butylene terephthalate) film, a polyurethane film, and an ethylene-vinyl acetate copolymer film.

The separator generally has a thickness of about 5 to 200 μm, and preferably about 10 to 100 μm. Within the above range, good workability can be obtained in bonding to the pressure-sensitive adhesive layer and in peeling from the pressure-sensitive adhesive layer, which is preferred. If necessary, the separator may be subjected to release and antifouling treatment with a silicone, fluoride, long-chain alkyl, or fatty acid amide release agent or silica powder or subj ected to antistatic treatment of coating type, kneading type, vapor-deposition type, or the like.

In the pressure-sensitive adhesive sheet of the present invention, which is a pressure-sensitive adhesive sheet having a pressure-sensitive adhesive layer formed using the pressure-sensitive adhesive composition on one or both surfaces of a supporting film, the shift length after 30 minutes from a creep test carried out at 23°C and a shearing load of 500 g by bonding an adhesive area of 200 $mm^2$ of the pressure-sensitive adhesive layer to a TAC polarizing plate is 2.5 mm or less, more preferably 2.0 mm or less, furthermore preferably 1.0 mm or less, and most preferably 0.5 mm or less. If the shift length exceeds 2.5 mm, blistering and peeling possibly occur and therefore, it is not preferable.

In the pressure-sensitive adhesive sheet of the present invention, the adhesion at a peeling rate of 0.3/min (low speed peeling) after 30 minute-bonding of the pressure-sensitive adhesive surface of the pressure-sensitive adhesive layer to the TAC surface at 23°C is 0.3 N/25 mm or less, preferably 0.25 N/25 mm or less, more preferably 0.2 N/25 mm or less, and most preferably 0.1 N/25 mm or less. If the adhesion exceeds 0.3 N/25 mm, the peeling workability is inferior and therefore, it is not preferable.

In the pressure-sensitive adhesive sheet of the present invention, the adhesion at a peeling rate of 30 m/min (high speed peeling) after 30 minute-bonding of the pressure-sensitive adhesive surface of the pressure-sensitive adhesive layer to the TAC surface at 23°C is 1.5 N/25 mm or less, preferably 0.05 to 1.5 N/25 mm, and more preferably 0.1 to 1.4 N/25 mm. If the adhesion exceeds 1.5 N/25 mm, it becomes difficult to peel the protecting film from an adherend and peeling workability becomes inferior when the protecting film is unnecessary and further, an adherend is damaged during the peeling step and therefore, it is not preferable.

The pressure-sensitive adhesive sheet of the present invention (including the case for use in a surface protecting film) has a potential (peeling electrification voltage: kV, absolute value), which is generated on the surface of a polarizing plate when the pressure-sensitive adhesive layer used for the pressure-sensitive adhesive sheet is peeled off the polarizing plate under the condition of 23°C and 50% RH, a peeling angle of 150°, and a peeling rate of 30 m/min (high-speed peeling), of preferably 1.2 kV or lower, more preferably 1.0 kV or lower, and furthermore preferably 0.8 kV or lower. It is not preferred that the peeling electrification voltage is more than 1.2 kV since damage of a liquid crystal driver or the like may occur.

An optical member of the present invention is preferably those which are protected with the pressure-sensitive adhesive sheet. The pressure-sensitive adhesive sheet has adequate adhesion so as not to cause blistering or peeling with the lapse of time and is excellent in the re-peeling property and the workability. Therefore, it is usable for the surface protecting use (surface protecting film) at the time of processing, transporting, shipping, and the like and therefore it is useful for protecting the surface of the optical member (for Example, the polarizing plate). In particular, the pressure-sensitive adhesive sheet can be used for plastic products in which static electricity tends to be generated easily and is thus very useful particularly for preventing electrification in optical and electronic components-related technical fields where electrification is a serious problem.

Examples

Examples which specifically show constructions and effects of the present invention will be described below. However, the present invention is not limited thereto. Evaluation items in Examples were measured by the following procedure.

<Measurement of Weight Average Molecular Weight>

A weight average molecular weight was measured using a GPC apparatus (HLC-8220GPC manufactured by Tosoh Corporation). Measuring conditions are as follows.

Sample concentration: 0.2wt% (THF solution)
Sample injection amount: 10μl
Eluent: THF
Flow rate: 0.6ml/min
Measuring temperature: 40°C
Column:
Sample column;
TSKguard column SuperHZ-H (1 column) +TSK gel Super HZM-H (2 columns)
Reference column;
TSK gel SuperH-RC(1 column)
Detector: Refractive index detector (RI)
A molecular weight was obtained in terms of polystyrene.

<Theoretical Value of Glass Transition Temperature>

A glass transition temperature Tg (°C) was determined by the following equation using the following reference values as a glass transition temperature Tgn (°C) of a homopolymer of each monomer.
$$\text{Equation: } 1/(Tg + 273) = \Sigma[Wn/(Tgn + 273)]$$

[where Tg (°C) represents a glass transition temperature of a copolymer, Wn (- ) represents a weight fraction of each monomer, Tgn (°C) represents a glass transition temperature of a homopolymer of each monomer, and n represents a kind of each monomer]
Reference values:

2-ethylhexyl acrylate (2EHA): -70°C
4-hydroxybutyl acrylate (4HBA): -32°C
acrylic acid (AA): 106°C
dicyclopentanyl methacrylate (DCPMA): 175°C
methyl methacrylate (MMA): 105°C

"Synthesis and Design of Acrylic Resin and Development of New Applications" (published by Publishing Department of Chuo Keiei Kaihatsu Center) and "Polymer Handbook" (John Wiley & Sons) were referred for literature values.

<Measurement of Glass Transition Temperature>

A glass transition temperature Tg (°C) was determined by the method described below using a dynamic viscoelasticity measurement system (ARES manufactured by Rheometric Scientific Inc.).
Sheets of a (meth) acryl- based polymer having a thickness of 20 μm were laminated into a thickness of about 2 mm, and this was punched into φ7.9 mm to prepare a cylindrical pellet, and this was used as a sample for measuring a glass transition temperature.
The measuring sample was fixed on a jig of a φ7.9 mm parallel plate and temperature dependency of loss elastic modulus G" was measured using the dynamic viscoelasticity measuring apparatus, and a temperature at which the resulting G" curve became a maximum was adopted as a glass transition temperature (°C).
Measuring conditions are as follows.
Measurement: shear mode
Temperature range: -70°C to 150°C
Temperature raising rate: 5°C/min
Frequency: 1 Hz

<Measurement of creep>

The pressure-sensitive adhesive sheet was cut into a piece in a size of 10 mm in width and 100 mm in length

and the separator was peeled off and thereafter the resulting piece was bonded to a TAC polarizing plate (polarizing plate SEG1423DU, manufactured by NITTO DENKO CORPORATION, 25 mm in width and 100 mm in length) in a manner that the adhesion surface area of the pressure-sensitive adhesive layer of the pressure-sensitive adhesive sheet was 200 $mm^2$ and a shearing load of 500 g was applied at 23°C to obtain an evaluation sample. The creep test, which was an evaluation test, was carried out in accordance with the measurement result (shift length: mm) after 30 minutes.

The shift length is 2.5 mm or less, preferably 2.0 mm or less, more preferably 1.0 mm or less, and most preferably 0.5 mm or less. If the shift length exceeds 2.5 mm, blistering and peeling may be caused and therefore, it is not preferable.

<Measurement of peeling electrification voltage>

The pressure-sensitive adhesive sheet was cut into a piece in a size of 70 mm in width and 130 mm in length and the separator was peeled off. Using a hand roller, the piece was then press-bonded to a surface of a TAC polarizing plate (polarizing plate SEG1423DU, manufactured by NITTO DENKO CORPORATION, 70 mm in width and 100 mm in length), which had been bonded to an acrylic plate (2 mm in thickness, 70 mm in width, and 100 mm in length) having undergone static elimination in advance, in such a manner that one end of the piece protruded by 30 mm out of the plate.

The resulting sample was allowed to stand at 23°C and 50% RH for a day and then set at a prescribed location as shown in Fig. 1. The one end protruding by 30 mm was fixed to an automatic winder, and the piece was peeled off at a peeling angle of 150° and a peeling rate of 30 m/min (high-speed peeling). The potential (peeling electrification voltage: kV, absolute value) generated on the surface of the polarizing plate in this process was measured using a potentiometer (KSD-0103, manufactured by KASUGA ELECTRIC WORKS LTD.) fixed above the center of the polarizing plate. The measurement was performed in an environment at 23°C and 50% RH.

The potential (peeling electrification voltage: kV, absolute value) generated on the surface of the polarizing plate when the pressure-sensitive adhesive layer used for the pressure-sensitive adhesive sheet is bonded to a polarizing plate at 23°C and 50% RH and peeled off at a peeling angle of 150° and a peeling rate of 30 m/min (high-speed peeling) is preferably 1.2 kV or lower, more preferably 1.0 kV or lower, and furthermore preferably 0.8 kV or lower. If the peeling electrification voltage exceeds 1.2 kV, for Example, a liquid crystal driver or the like may possibly be damaged and therefore it is not preferable.

<Measurement of initial adhesion>

A TAC polarizing plate (polarizing plate SEG1423DU, manufactured by NITTO DENKO CORPORATION, 70 mm in width and 100 mm in length) was allowed to stand in an environment at 23°C and 50% RH for 24 hours, and then a 25 mm wide and 100 mm long cut piece of the pressure-sensitive adhesive sheet was laminated to the adherend under a pressure of 0.25 MPa at a speed of 0.3 m/min to obtain an evaluation sample.

After the lamination, the sample was allowed to stand in an environment at 23°C and 50% RH for 30 minutes, and then using a universal tensile tester, the initial adhesion (N/25 mm) was measured at the time of peeling off the sheet at a peeling rate of 0.3 m/min (low-speed peeling) or 30 m/min (high-speed peeling) and a peeling angle of 180°. The measurement was performed in an environment at 23°C and 50% RH.

In the case of a peeling rate of 0.3m/min (low-speed peeling), the adhesion is 0.3 N/25 mm or less, preferably 0.25 N/25 mm or less, more preferably 0.2 N/25 mm or less, and most preferably 0.1 N/25 mm or less. If the adhesion (A) exceeds 0.3 N/25 mm, the peeling workability is inferior and therefore, it is not preferable.

In the case of a peeling rate of 30 m/min (high-speed peeling), the adhesion is 1. 5 N/25 mm or less, preferably 0.05 to 1.5 N/25 mm, and more preferably 0.1 to 1.4 N/25 mm. If the adhesion exceeds 1.5 N/25 mm, it becomes difficult to peel the protecting film off an adherend and peeling workability becomes inferior when the protecting film is unnecessary and further an adherend is damaged during the peeling step and therefore, it is not preferable.

<Evaluation of blistering and peeling with the lapse of time>

The pressure-sensitive adhesive sheet was cut into a piece in a size of 50 mm in width and 50 mm in length and the separator was peeled off and then, the piece was press-bonded (by reciprocating a 2 kg roller once) to a TAC polarizing plate (polarizing plate SEG1423DU manufactured by NITTO DENKO CORPORATION, 60 mm in width and 60 mm in length), which had been bonded to a glass plate. The resultant was allowed to stand at 60°C and 95% RH for 24 hours and thereafter, blistering and peeling of the pressure-sensitive adhesive sheet were observed with eyes. The evaluation standard was as follows.

O: free from blistering and peeling
Δ: blistering and peeling slightly observed
×: blistering and peeling occurred

Preparation of (meth)acryl-based polymer

A four- neck flask equipped with a stirring blade, a thermometer, a nitrogen gas introduction tube, and a condenser was charged with 100 parts by weight of 2- ethylhexyl acrylate (2EHA), 5 parts by weight of 4- hydroxybutyl acrylate (4HBA), 0.2 parts by weight of 2, 2'- azobisisobutyronitrile as a polymerization initiator, and 157 parts by weight of ethyl acetate and nitrogen gas was introduced under a condition of stirring mildly and then polymerization reaction was performed for 6 hours while the liquid temperature in the flask being kept at about 65°C to prepare a (meth) acryl-based polymer solution (40 wt. %) . This acryl- based polymer had a weight average molecular weight of 540, 000 and a glass transition temperature (Tg) of- 68°C.

Other (meth) acryl-based polymers were prepared by changing the mixing ratio as shown in Table 1 in the same manner as described above. The physical property values obtained were as shown in Table 1.

Preparation of acrylic oligomer

A four-neck flask equipped with a stirring blade, a thermometer, a nitrogen gas introduction tube, a condenser, and a dropping funnel was charged with 100 parts by weight of toluene, 60 parts by weight of dicyclopentanylmethacrylate (DCPMA) (trade name: FA-513M, manufactured by Hitachi Chemical Co., Ltd.), 40 parts by weight of methyl methacrylate (MMA), and 3.5 parts by weight of methyl thioglycolate as a chain transfer agent. After the mixture was stirred at 70°C for 1 hour under nitrogen atmosphere, 0.2 parts by weight of 2, 2'-azobisisobutyronitrile as a polymerization initiator was added and reaction was performed at 70°C for 2 hours, then at 80°C for 4 hours, and thereafter at 90°C for 1 hour to obtain an acrylic oligomer. The acrylic oligomer had a weight average molecular weight of 4,000 and a glass transition temperature (Tg) of 144°C.

Preparation of antistatic-treated film

An antistatic agent solution was prepared by diluting 10 parts by weight of an antistatic agent (Microsolver RMd-142, manufactured by Solvex Co., Ltd. , containing, as main components, tin oxide and a polyester resin) with a mixed solvent containing 30 parts by weight of water and 70 parts by weight of methanol.

The obtained antistatic agent solution was applied to a poly (ethylene terephthalate (PET) film (thickness: 38 μm) using a Meyer bar, followed by drying at 130°C for 1 minute to remove the solvent to form an antistatic layer (thickness: 0.2 μm), and thus an antistatic-treated film was prepared.

Example 1

Preparation of pressure-sensitive adhesive solution

The (meth) acryl- based polymer solution (40 wt. %) was diluted to 20% by weight with ethyl acetate. Then, 500 parts by weight (solid matter: 100 parts by weight) of the obtained solution was mixed and stirred with 2.1 parts by weight (solid matter: 0.21 parts by weight) of a solution obtained by diluting an organopolysiloxane (KF- 353, manufactured by Shin- Etsu Chemical Co., Ltd.) to 10% with ethyl acetate, 6 parts by weight (solid matter: 0.06 parts by weight) of a solution obtained by diluting lithium bis (trifluoromethanesulfone) imide (LiN $(CF_3SO_2)_2$: LiTFSI, manufactured by Tokyo Kasei Kogyo Co., Ltd.) to 1% with ethyl acetate as an alkali metal salt, that is, an antistatic agent, 1 part by weight (solid matter: 1 part by weight) of an isocyanurate isomer of hexamethylene diisocyanate (CORONATE HX, manufactured by Nippon Polyurethane Industry Co. , Ltd.) as a crosslinking agent, and 2 parts by weight (solid matter: 0.02 parts by weight) of dibutyltin dilaurate (1 wt. % ethyl acetate solution) to obtain an acrylic pressure- sensitive adhesive solution.

Preparation of pressure-sensitive adhesive sheet

The acrylic pressure-sensitive adhesive solution was applied to the opposite surface to the antistatic-treated surface of the antistatic-treated film and heated at 130°C for 2 minutes to form a 15 μm thick pressure-sensitive adhesive layer. Next, a poly (ethylene terephthalate) film (thickness: 25 μm) with one side treated with silicone was provided, and the silicone-treated surface of the polyethylene terephthalate film was bonded to the surface of the pressure-sensitive adhesive layer to prepare a pressure-sensitive adhesive sheet.

Examples 2 to 9 and Comparative Examples 1 to 4

Pressure- sensitive adhesive sheets were prepared in the same manner as that in Example 1, except that the component mixing ratios were changed as shown in Table 1. The mixing amount in Table 1 is based on solid matter.

Example 10

A pressure-sensitive adhesive sheet was prepared in the same manner as that in Example 1 according to the mixing ratios as shown in Table 1 and Table 2, except that 1 part by weight of an acrylic oligomer was further added.

Example 11

A pressure-sensitive adhesive sheet was prepared in the same manner as that in Example 1 according to the mixing ratios as shown in Table 1, except that 0.5 parts by weight (solidmatter: 0.005partsbyweight) of tris (acetylacetonato) iron (1wt.%ethyl acetate solution) was used as a crosslinking catalyst in place of dibutyltin dilaurate.

Example 12

A pressure-sensitive adhesive sheet was prepared in the same manner as that in Example 1 according to the mixing ratios as shown in Table 1, except that 1 part by weight of an acrylic oligomer was further added and 0.5 parts by weight (solid matter : 0.005 parts by weight) of tris (acetylacetonato) iron (1wt. % ethyl acetate solution) was used as a crosslinking catalyst in place of dibutyltin dilaurate.

According to the above-mentioned methods, the prepared pressure-sensitive adhesive sheets were subjected to the evaluation of creep, adhesion at high-peeling and low-peeling rates, initial peeling electrification voltage measurement, and peeling and blistering evaluation with the lapse of time. The obtained results are shown in Table 2.

[Table 1]

| Unit (parts by weight) | | Monomer component | | | Obtained polymer | | Ratio of COOH monomer (wt.%) | Obtained polymer | Crosslinking agent | Organopoly siloxane | | Ionic compound | |
|---|---|---|---|---|---|---|---|---|---|---|---|---|---|
| | | 2EHA | 4HBA | AA | Tg (°C) | Mw | | | C/HX | Type (trade name) | Mixing ratio | Type (trade name) | Mixing ratio |
| Example | 1 | 100 | 5 | | -68 | 540,000 | 0.00 | 100 | 1 | KF353 | 0.21 | LiTFSI | 0.06 |
| | 2 | 100 | 5 | 0.01 | -68 | 540,000 | 0.01 | 100 | 1 | KF353 | 0.21 | LiTFSI | 0.06 |
| | 3 | 100 | 5 | 0.01 | -68 | 540,000 | 0.01 | 100 | 1.5 | KF353 | 0.21 | LiTFSI | 0.06 |
| | 4 | 100 | 5 | 2 | -67 | 570,000 | 1.87 | 100 | 1 | KF353 | 0.21 | LiTFSI | 0.06 |
| | 5 | 100 | 5 | | -68 | 540,000 | 0.00 | 100 | 1 | KF353 | 0.21 | | |
| | 6 | 100 | 5 | 0.01 | -68 | 540,000 | 0.01 | 100 | 1 | KF353 | 0.21 | | |
| | 7 | 100 | 5 | 0.1 | -68 | 540,000 | 0.10 | 100 | 1 | KF353 | 0.21 | | |
| | 8 | 100 | 5 | 2 | -67 | 570,000 | 1.87 | 100 | 1 | KF353 | 0.21 | | |
| | 9 | 100 | 5 | 0.01 | -68 | 540,000 | 0.01 | 100 | 1 | KF353 | 0.21 | BMPTFSI | 0.2 |
| | 10 | 100 | 5 | 0.01 | -68 | 540,000 | 0.01 | 100 | 1.5 | KF353 | 0.21 | LiTFSI | 0.06 |
| | 11 | 100 | 10 | 0.01 | -67 | 540,000 | 0.01 | 100 | 1.5 | KF353 | 0.21 | LiTFSI | 0.06 |
| | 12 | 100 | 10 | 0.01 | -67 | 540,000 | 0.01 | 100 | 1.5 | KF353 | 0.21 | LiTFSI | 0.06 |

(continued)

| Unit (parts by weight) | | Monomer component | | | Obtained polymer | | Ratio of COOH monomer (wt.%) | Obtained polymer | Crosslinking agent | Organopoly siloxane | | Ionic compound | |
|---|---|---|---|---|---|---|---|---|---|---|---|---|---|
| | | 2EHA | 4HBA | AA | Tg (°C) | Mw | | | C/HX | Type (trade name) | Mixing ratio | Type (trade name) | Mixing ratio |
| Comparative Example | 1 | 100 | 5 | 1 | -68 | 560,000 | 0.94 | 100 | 1 | KF353 | 0.21 | LiTFSI | 0.06 |
| | 2 | 100 | 5 | 5 | -64 | 570,000 | 4.55 | 100 | 1 | KF353 | 0.21 | LiTFSI | 0.06 |
| | 3 | 100 | 5 | 1 | -68 | 560,000 | 0.94 | 100 | 1 | KF353 | 0.21 | | |
| | 4 | 100 | 5 | 5 | -64 | 570,000 | 4.55 | 100 | 1 | KF353 | 0.21 | | |

Remark) The abbreviations in Table 1 are as follows.
2EHA: 2-ethylhexyl acrylate
4HBA: 4-hydroxybutyl acrylate
AA: acrylic acid (carboxyl group-containing (meth)acryl-based monomer)
COOH monomer: carboxyl group-containing (meth)acryl-based monomer
C/HX: isocyanate compound: isocyanurateisomerofhexamethylene diisocyanate (trade name: CORONATE HX, manufactured by Nippon Polyurethane Industry Co., Ltd)
LiTFSI: alkali metal salt: lithium bis(trifluoromethanesulfone)imide ($LiN(CF_3SO_2)_2$), manufactured by Tokyo Kasei Kogyo Co., Ltd.) BMPTFSI: ionic liquid: 1-butyl-3-methylpyridinium bis(trifluoromethanesulfonyl)imide (manufactured by Sigma Aldrich, liquid at 25°C)
KF353: organopolysiloxane (HLB value:10, trade name: KF-353, manufactured by Shin-Etsu Chemical Co., Ltd.)

[Table 2]

| Evaluation result | | Creep (mm) | Initial adhesion (N/25 mm) | | Peeling electrification voltage (kV) | Peeling and blistering with the lapse of time |
|---|---|---|---|---|---|---|
| | | RT aged product | 0.3 m/min | 30 m/min | | |
| Example | 1 | 0.10 | 0.05 | 1.4 | 0 | ○ |
| | 2 | 0.10 | 0.04 | 1.2 | 0 | ○ |
| | 3 | 0.10 | 0.04 | 1.0 | 0 | ○ |
| | 4 | 0.10 | 0.13 | 1.5 | -0.2 | ○ |
| | 5 | 0.10 | 0.06 | 1.3 | | ○ |
| | 6 | 0.10 | 0.06 | 1.4 | | ○ |
| | 7 | 1.20 | 0.05 | 1.1 | | ○ |
| | 8 | 1.90 | 0.07 | 0.6 | | ○ |
| | 9 | 0.10 | 0.03 | 1.4 | 0 | ○ |
| | 10 | 0.10 | 0.06 | 0.9 | 0 | ○ |
| | 11 | 0.20 | 0.04 | 0.6 | 0 | ○ |
| | 12 | 0.10 | 0.06 | 0.6 | 0 | ○ |
| Comparative Example | 1 | 3.20 | 0.05 | 1.0 | 0 | Δ |
| | 2 | 0.10 | 0.51 | 1.8 | -1.4 | ○ |
| | 3 | 5.00 | 0.05 | 1.0 | | Δ |
| | 4 | 0.10 | 0.41 | 1.1 | | ○ |
| Remark) The blank parts in Table 2 indicate that no evaluation was performed. | | | | | | |

The results in Table 2 revealed that all of Examples were excellent in the adhesion at the time of low speed and high speed peeling, re-peeling property, and workability attributed to these properties. Further, in Example 1 to Example 4 and Example 9 to Example 12 in which the antistatic agent was added, it was confirmed that the absolute value of the peeling electrification voltage was suppressed to low and the antistatic property was provided. Still further, the pressure-sensitive adhesive sheets obtained in Examples were confirmed to be useful for surface protecting applications for an optical member or the like.

In contrast, in Comparative Example 1 and Comparative Example 3, it is assumed that acrylic acid, which is a carboxyl group- containing (meth) acryl- based monomer, worked as a catalytic poison (having an action of weakening the catalytic effect) and led to insufficient promotion of crosslinking, decrease of the cohesive power, and worsening of creep (shift length) . Although Example 4 and Example 8 were higher in the mixing ratio of acrylic acid than in Comparative Example 1 and Example 3, Example 4 and Example 8 showed better creep than Comparative Example 1 and Comparative Example 3. The reason for that is supposed to be the interaction between the carboxyl group of acrylic acid, which is a carboxyl group- containing (meth) acryl- based monomer, and the polar group existing in the surface (TAC surface) of the TAC polarizing plate. In Comparative Example 2 and Comparative 4, it was confirmed that the low speed adhesion exceeded a desired range and the re- peeling property was inferior since the mixing ratio of acrylic acid, which is a carboxyl group- containing (meth) acryl- based monomer, was high. Further, in Comparative Example 2, it was confirmed that the conductivity of the ionic compound was lowered and the antistatic property could not be provided sufficiently in spite of addition of the ionic compound, since the mixing amount of acrylic acid was large.

EXPLANATION OF THE REFERENCE NUMERALS

1 Potential meter
2 Pressure-sensitive adhesive sheet

(continued)

| | |
|---|---|
| 3 | Plarizing plate |
| 4 | Acrylic plate |
| 5 | Sample mount |

## Claims

1. A pressure-sensitive adhesive sheet comprising a pressure-sensitive adhesive layer formed using a pressure-sensitive adhesive composition on one or both surfaces of a supporting film, wherein
the shift length after 30 minutes from a creep test carried out at 23°C and a shearing load of 500 g by bonding an adhesive area of 200 $mm^2$ of the pressure-sensitive adhesive layer to a TAC polarizing plate is 2.5 mm or less, and the adhesion at a peeling rate of 0.3 m/min after 30 minute-bonding of a pressure-sensitive adhesive surface of the pressure-sensitive adhesive layer to a TAC surface at 23°C is 0.3 N/25 mm or less.

2. The pressure-sensitive adhesive layer according to claim 1, wherein the adhesion at a peeling rate of 30 m/min after 30 minute-bonding of the pressure-sensitive adhesive surface of the pressure-sensitive adhesive layer to the TAC surface at 23°C is 1.5 N/25 mm or less.

3. The pressure- sensitive adhesive sheet according to claim 1 or 2, wherein the pressure- sensitive adhesive composition comprises a (meth) acryl- based polymer and comprises 15 wt. % or less of a hydroxyl group- containing (meth) acryl- based monomer in the entire amount of monomer components composing the (meth) acryl- based polymer.

4. The pressure- sensitive adhesive sheet according to any one of claims 1 to 3, comprising 50 wt. % or more of a (meth) acryl- based monomer having an alkyl group of 1 to 14 carbon atoms in the entire amount of monomer components composing the (meth) acryl- based polymer.

5. The pressure-sensitive adhesive sheet according to any one of claims 1 to 4, wherein the pressure-sensitive adhesive composition comprises a crosslinking agent.

6. The pressure- sensitive adhesive sheet according to any one of claims 1 to 5, wherein the pressure- sensitive adhesive composition comprises a (meth) acryl- based polymer having a hydroxyl group and a carboxyl group.

7. The pressure-sensitive adhesive sheet according to any one of claims 1 to 6, wherein the pressure-sensitive adhesive composition comprises an organopolysiloxane having an oxyalkylene chain.

8. The pressure-sensitive adhesive sheet according to any one of claims 1 to 7, wherein the pressure-sensitive adhesive composition comprises an ionic compound.

9. An optical member protected by the pressure-sensitive adhesive sheet according to any one of claims 1 to 8.

Fig.1

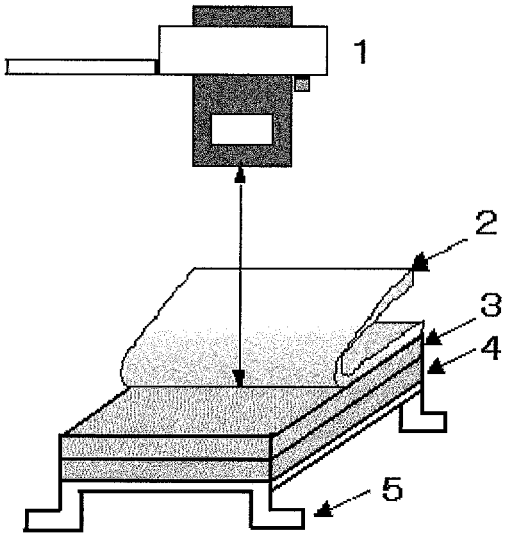

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9165460 A


### Non-patent literature cited in the description


- Synthesis and Design of Acrylic Resin and Development of New Applications. Publishing Department of Chuo Keiei Kaihatsu Center
- Polymer Handbook. John Wiley & Sons